(19) **Europäisches Patentamt / European Patent Office / Office européen des brevets**

(11) **EP 4 183 116 B1**

(12) **EUROPEAN PATENT SPECIFICATION**

(45) Date of publication and mention of the grant of the patent:
**28.01.2026 Bulletin 2026/05**

(21) Application number: **20746588.1**

(22) Date of filing: **22.07.2020**

(51) International Patent Classification (IPC):
**H04L 47/34** *(2022.01)*

(52) Cooperative Patent Classification (CPC):
**H04L 47/34**

(86) International application number:
**PCT/EP2020/070605**

(87) International publication number:
**WO 2022/017593 (27.01.2022 Gazette 2022/04)**

(54) **HARDWARE BASED PIPELINED SORTER**

HARDWARE-BASIERTER PIPELINE-SORTIERER

TRIEUSE EN PIPELINE À BASE MATÉRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2023 Bulletin 2023/21**

(73) Proprietor: **Huawei Technologies Co., Ltd.**
**Shenzhen, Guangdong 518129 (CN)**

(72) Inventors:
• **GAL, Zion**
**80992 Munich (DE)**
• **ZECHARIA, Rami**
**80992 Munich (DE)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**US-A1- 2008 192 754     US-A1- 2018 095 719**

**Description**

TECHNICAL FIELD

The present disclosure, relates to sorting indexed data items received out of order and, more specifically, but not exclusively, to sorting indexed data items received out of order using a linked list managed by a hardware processing device comprising a plurality of hierarchically arranged processing units. The present invention relates to a data processing unit and a method for reordering such a set of data items.

BACKGROUND

Ordering indexed data received out of order in monotonic incrementing order according to the values of the indices may be highly desirable and potentially essential for a plurality of applications.

Such applications may include, for example, ordering network traffic packets transmitted by a transmitter in order and received by a receiver out of order to construct the data items stream as transmitted by the transmitter. Each of the transmitted data packets may include a unique index indicating the position of the respective data packet in the stream. Since later data packets traveling a faster network path may arrive before earlier transmitted data packets, the receiver must first order the received data packets as transmitted by the transmitter.

In another example, some communication systems may assign a rank value to each data packet indicating when each arriving packet is eligible to be scheduled out of queue and must therefore enter a First In First Out (FIFO) queue of packets in a position based on its rank. Since packets of higher rank may arrive after lower ranking packets which are already in the FIFO, the queue must be re-arranged according to the ranking.

US 2008/192754 A1 discloses a method of managing rule entries of a Ternary Content Addressable Memory (TCAM) in a routing system includes: creating a hash table having a hash key corresponding to each entry; creating a single linked list for linking nodes, the single linked list using the entry of the hash table as a head node and including rule IDs and sequence IDs assigned according to a rule input order; and a double linked list having an independent head node, the double linked list bidirectionally linking the nodes constituting the single linked list according to an order of the sequence IDs. Thus, the packet classifying/filtering rule can be easily added to the TCAM or deleted from the TCAM only with minimal information. Also, the sequence ID reassignment process, required for storing as many rules in the TCAM as possible according to the priority of the rules, is performed when a certain time elapses following rule addition or deletion, thereby reducing a latency that may be caused upon setting the packet classifying/filtering rule.

US 2018/095719 A1 discloses a system and method for implementing a sorted linked list with a midpoint binary tree pointer herein. The midpoint binary tree pointer contains a predetermined level, with the level being associated with dynamically rebalanced midpoints that bifurcate the sorted linked list into a variety of segments. By doing this, the implementer of these systems and methods achieves a faster way of accessing and creating stored linked lists.

SUMMARY

The invention is defined as described in the appended claims.

GENERAL DESCRIPTION

The object of the present invention is to provide a data processing unit and a method for effectively, efficiently and rapidly ordering indices of data items which may be received out of order where the indices may be arranged in a monotonic incrementing order according to their value starting form a lowest index value to a highest index value. This object is solved by the attached independent claims and further embodiments and improvements of the invention are listed in the attached dependent claims.

According to a first aspect there is provided a data processing device for ordering a set of data items according to indices of the data items and for providing sequential access to the ordered set of data items. Each of the data items having one of the indices. The data processing device comprises a first processing unit and a second processing unit connected to each other. The first processing unit is configured to generate a linked list, the linked list providing a sequence of indices and a sequence of data items, the sequence of indices comprising the indices in a monotonic order, the linked list comprising a sequence of nodes, each node providing one of the indices and providing the data item having that index. Generating the linked list comprises generating, for each data item in the set of data items, a respective node of the linked list. Generating the respective node comprises finding a position in the linked list for generating the respective node. Finding the position in the linked list for generating the respective node comprises traversing one or more existing nodes of the linked list from a start node to a stop node and comparing, for each of the traversed nodes, the index of the respective data item against the index provided by the respective traversed node. The second processing unit is configured to signal a start node identification to the first processing unit, the start node identification identifying one of the nodes of the linked list as the start node.

According to a second aspect there is provided a method of ordering a set of data items according to indices of the data items and for providing sequential access to the ordered set of data items. Each of the data items having one of the indices. The ordering is done using a data processing device comprises a first processing unit and a second processing unit connected to each other. The first processing unit is configured to generate a linked list, the linked list providing a sequence of indices and a sequence of data items, the sequence of indices comprising the indices in a monotonic order, the linked list comprising a sequence of nodes, each node providing one of the indices and providing the data item having that index. Generating the linked list comprises generating, for each data item in the set of data items, a respective node of the linked list. Generating the respective node comprises finding a position in the linked list for generating the respective node. Finding the position in the linked list for generating the respective node comprises traversing one or more existing nodes of the linked list from a start node to a stop node and comparing, for each of the traversed nodes, the index of the respective data item against the index provided by the respective traversed node.

Using a hardware processing device comprising a plurality of processing units arranged hierarchically in a plurality of layers one on top of the other may significantly increase performance of ordering the indices of the received data items according to their index values. The performance is increased since each processing unit may generate an independent linked list which is significantly reduced in its size compared to the link list generated by the next lower layer and may be used as a shortcut list for its next lower layer linked list. Each processing unit may thus traverse its respective linked list to identify and signal a start point for the next lower layer processing unit from where to start traversing its own respective linked list thus significantly expediting identification of the position in which each newly received index need to be added to the bottom layer linked list.

In a further implementation form of the first and/or second aspects, the first processing unit and the second processing unit are configured to operate in parallel. Each of the plurality of processing units of the processing device may include its own dedicated and separate processing and storage resources and may thus operate in parallel. Specifically, each processing unit may process a next received index such that it may provide a start point to its next lower layer processing unit for another received index.

In a further implementation form of the first and/or second aspects, the stop node is a node of the linked list that provides an index greater than the index of the respective data item. The stop node stores an index value which is greater than the value of the received index and should be therefore stored in a node generated and inserted before the stop node.

in a further implementation from of the first and/or second aspects, the linked list generated by the first processing unit is a first linked list and the second processing unit is configured to generate a second linked list. The second linked list comprises one or more nodes associated with one or more nodes of the first linked list, each of the one or more nodes of the second linked list comprising a pointer to a respective node of the first linked list and comprising the index provided by that respective node of the first linked list. The second linked list comprises fewer nodes than the first linked list, and the indices provided by the nodes of the second linked list form a subsequence of the sequence of indices provided by the first linked list. The second processing unit is configured to select the start node by traversing one or more nodes of the second linked list from a start node to a stop node and comparing, for each of the traversed nodes, the index of the respective data item against the index provided by the respective traversed node, the second layer processing unit and similarly each higher layer processing unit may generate its own respective linked list which comprises fewer nodes compared to the linked list of the respective lower layer. The processing unit may therefore more rapidly traverse the shorter linked list to identify the start point which is used by the next lower layer processing unit to start traversing its respective linked list. As such each processing unit may avoid traversing its entire linked list but rather focus on the relevant section as signaled by the next higher layer processing unit.

In an optional implementation form of the first and/or second aspects, the processing device further comprising a third processing unit configured to generate a third linked list. The third linked list comprises one or more nodes associated with one or more nodes of the second linked list, each of the one or more nodes of the third linked list comprising a pointer to a respective node of the second linked list and comprising the index provided by that respective node of the second linked list. The third linked list comprises fewer nodes than the second linked list, and the indices provided by the nodes of the third linked list form a subsequence of the sequence of indices provided by the second linked list, the third processing unit being configured to select one of the nodes of the second linked list as the start node of the second linked list and to signal a start node identification to the second processing unit, the start node identification identifying one of the nodes of the second linked list as the start node of the second linked list. Increasing the number of processing units may further improve sorting performance of the processing device since each higher layer linked list may serve a shortcut list for its next lower layer linked list thus expediting traversing each lower layer linked list.

In a further implementation form of the first and/or second aspects, the second processing unit being configured to generate a new node in the second linked list corresponding to a respective node generated in the first linked list according to a predefined probability, and the third processing unit being configured to generate a new node in the third linked list corresponding to a respective node generated in the second linked list according to a predefined probability.

Each higher layer linked list starting from the second layer linked list may include fewer nodes compared to its next lower layer linked list which are configured to store a subset of the indices stored in the lower layer linked list. As such the shorter linked list may be traversed more rapidly to identify the start point signaled to the next lower layer processing unit.

In a further implementation form of the first and/or second aspects, the first processing unit is configured to remove from the first linked list each node corresponding to an index of a respective data item which is provided by the data processing device, and the second processing unit is configured to remove from the second linked list each node associated with a respective node removed from the first linked list. In order to maintain accurate and up to date linked lists, each removed index relating to removed data item must be removed accordingly from the first (bottom) layer linked list as well as from all higher layer linked lists if applicable.

In a further implementation form of the first and/or second aspects, the first processing unit comprises a head pointer pointing to a first node of the first linked list, a tail pointer pointing to a last node of the first linked list and an empty indicator indicating whether the first linked list comprises at least one node, and the second processing unit comprises a head pointer pointing to a first node of the second linked list, a tail pointer pointing to a last node of the second linked list and an empty indicator indicating whether the second linked list comprises at least one node. Each processing unit comprises head and tail pointers for efficiently accessing its respective linked list.

In a further implementation form of the first and/or second aspects, each of the nodes of the first linked list is configured to comprise a next pointer pointing to a succeeding node in the first linked list, and each of the nodes of the second linked list is configured to comprise a next pointer pointing to a succeeding node in the second linked list. Each node is configured to point to its succeeding node to form the respective linked list.

In a further implementation form of the first and/or second aspects, the first processing unit and the second processing unit each comprise a memory and a controller connected to the memory. Allocating a separate controller and memory to each processing unit may enable the plurality of control units to operate simultaneously in parallel thus increasing the indices ordering performance of the processing device.

In a further implementation form of the first and/or second aspects, the data processing device is implemented at gate level using at least one hardware description language. Implementing the processing device in hardware with no software execution modules may further increase the ordering performance since the hardware operations may be executed significantly faster using dedicated hardware elements typically executing at clock cycle speeds.

In a further implementation form of the first and/or second aspects, at least the first processing unit further comprising a First-In-First-Out (FIFO) unit configured to temporarily store at least one start node start point indices signaled by the second processing unit. Deploying a FIFO for one or more of the processing units may allow decoupling the execution of one or more of the processing units from other processing units which operate in parallel typically at different speeds due to the difference in the size of their respective linked lists. As such lower levels processing units processing larger linked list may potentially slow down higher layer processing units traversing shorter linked lists. The FIFO may therefore allow the faster processing units to process one or more additional received indices while the processing unit of the next lower layer is still busy processing a previous received index.

In an optional implementation form of the first and/or second aspects, the data processing device is further configured to merge at least some high level layer processing units to a single layer processing unit which aggregates the nodes generated by the at least some high layer processing units. Traversing multiple empty and/or few nodes linked lists of the top layers may somewhat degrade the ordering performance. Merging these sparse linked lists to a single linked list may therefore reduce the number of layers that need to process thus increasing the ordering performance.

In an optional implementation form of the first and/or second aspects, each of the nodes is further configured to provide multiple indices all accessible in a single access to the node, collecting several indices in a single node may allow accessing the multiple indices in a single read cycle which may thus reduce the memory read cycle overhead to further increase the ordering performance.

Other systems, methods, features, and advantages of the present disclosure will be or become apparent to one with skill in the art upon examination of the following drawings and detailed description.

Unless otherwise defined, all technical and/or scientific terms used herein have the same meaning as commonly understood by one of ordinary skill in the art to which the embodiments pertain. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

Implementation of the method and/or system of embodiments disclosed herein can involve performing or completing selected tasks manually, automatically, or a combination thereof. Moreover, according to actual instrumentation and equipment of embodiments of the method and/or system of disclosed herein, several selected tasks could be implemented by hardware, by software or by firmware or by a combination thereof using an operating system.

For example, hardware for performing selected tasks according to embodiments disclosed herein could be implemented as a chip or a circuit. As software, selected tasks according to embodiments disclosed herein could be implemented as a plurality of software instructions being executed by a computer using any suitable operating system. In an exemplary embodiment disclosed herein, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

BRIEF DESCRIPTION OF THE SEVERAL VIEWS OF THE DRAWINGS

Some embodiments disclosed herein are described, by way of example only, with reference to the accompanying drawings. With specific reference now to the drawings in detail, it is stressed that the particulars shown are by way of example and for purposes of illustrative discussion of embodiments disclosed herein. In this regard, the description taken with the drawings makes apparent to those skilled in the art how embodiments disclosed herein may be practiced.

In the drawings:

FIG. 1 is a schematic illustration of an exemplary data processing device configured for ordering a set of data items received out of order according to indices assigned to the data items, according to some embodiments disclosed herein;

FIG. 2 is a schematic illustration of an exemplary processing unit of a data processing device configured for ordering a set of data items received out of order according to indices assigned to the data items, according to some embodiments disclosed herein;

FIG. 3 is a schematic illustration of exemplary linked lists generated by processing units of a data processing device configured for ordering an exemplary set of data items received out of order, according to some embodiments disclosed herein;

FIG. 4 is a schematic illustration of an exemplary hierarchical linked lists structure generated by processing units of a data processing device configured for ordering a set of data items received out of order, according to some embodiments disclosed herein;

FIG. 5A is a flow chart of an exemplary process of inserting a node corresponding to a received data item in an ordered position in a bottom linked list generated by a bottom layer processing unit of a data processing device configured for ordering a set of data items received out of order, according to some embodiments disclosed herein;

FIG. 5B is a flow chart of an exemplary process of updating linked lists generated by higher layer processing units of a data processing device configured for ordering a set of data items received out of order, according to some embodiments disclosed herein;

FIG. 6 is a schematic illustration of an exemplary sequence for adding a node corresponding to a received data item into a bottom linked list generated by a bottom layer processing unit of a data processing device configured for ordering a set of data items received out of order;

FIG. 7 is a flow chart of an exemplary process of removing a node corresponding to a removed data item from linked lists generated by processing units of a data processing device configured for ordering a set of data items received out of order, according to some embodiments disclosed herein;

FIG. 8A and FIG. 8B are schematic illustrations of an exemplary sequence for removing a node corresponding to a removed data item from linked lists generated by processing units of a data processing device configured for ordering a set of data items received out of order, according to some embodiments disclosed herein; and

FIG. 9A, FIG. 9B and FIG. 9C are graph charts demonstrating read sequence performance of a data processing device configured for ordering a set of data items received out of order, according to some embodiments disclosed herein.

DETAILED DESCRIPTION

The present disclosure, in some embodiments thereof, relates to sorting indexed data items received out of order and, more specifically, but not exclusively, to sorting indexed data items received out of order using a linked list managed by a hardware processing device comprising a plurality of hierarchically arranged processing units.

According to some embodiments disclosed herein there are presented devices, systems and methods for ordering indexed data items which may be received out of order. Specifically, each of the data items is assigned a respective unique index of a plurality of indices and the indices are arranged in a monotonic incrementing order starting from a lowest index value to a highest index value.

In particular, the indices may be ordered using a processing device interchangeably designated hardware sorter herein after, for example, an Integrated Circuit (IC), an Application Specific Integrated Circuit (ASIC), a Field Programmable Gate Array (FPGA) and/or the like which may be implemented at gate level using one or more hardware description languages as known in the art.

The processing device may be constructed of a plurality of processing units hierarchically arranged in layers one on top the other. Each of the processing units (processing pipelines) may include dedicated processing resources (control logic) and memory resources and the plurality of processing units may therefore execute in parallel independently from each other.

The indices ordering is based on generating and maintaining a linked list such that a new node is generated for each received index and inserted into the linked list at a position determined by the value of the respective received index. However, in order to improve performance of the indices ordering and expedite identification of the position in which each generated node needs to be inserted in the linked list, each processing unit may generate its respective linked list which may serve as a shortcut list for the next lower layer linked list.

While the bottom layer linked list generated by the bottom layer processing unit may comprise all the nodes generated to store the currently active and valid received indices, each higher layer linked list may include fewer nodes compared to the respective next lower linked list. The fewer nodes of the linked list in each layer are therefore generated to store only a subset of the indices stored by the respective next lower linked list. Each node in each higher layer linked list further includes a down pointer pointing to corresponding node in the next lower layer linked list which stores the same index value.

When a new data item is received, specifically a new index of the received data item, the process may start from a top most layer, specifically a top most layer having a non-empty linked list. The top most processing pipeline may traverse the significantly short linked list to rapidly identify a position of the received index among the index(s) already present in its respective linked list and may provide the identified position as a start point for the next lower layer processing unit to start traversing its respective linked list. As such the next layer processing unit may avoid traversing its entire linked list and focus only on the relevant section of the linked list as signaled by the higher layer processing unit.

This process may recursively propagate to the bottom layer where the bottom layer processing device may generate a new node in the bottom layer linked list at the position identified according to the value of the received index.

After the received index is stored in the newly generated node, a node for storing the respective received index may be generated in one or more higher layer linked lists according to a predefined probability. As such the linked lists may be constantly updated to reflect the indices stored by the nodes in the bottom layer linked list while comprising only a fraction of the nodes compared to their respective next lower layer linked lists where the fraction is defined by the probability value.

When a data item is removed, for example, processed, discarded, expired and/or the like its respective index may be removed from the bottom layer linked list, again to maintain an accurate and reliable higher layer linked lists the removed index may be further removed from all higher layers linked lists where it may be present.

Optionally, one or more of the processing units may further include a FIFO configured to store one or more signaled start points received from their respective next higher layer processing units for one or more received indices.

Optionally, several top most layer may be aggregated such that their linked lists are merged to form a single linked list aggregating the node of the linked lists of the several layers.

Optionally, each of the nodes is configured to store multiple indices thus forming an "unrolled linked list" as known in the art.

Using the hardware processing device comprising the plurality of independent processing pipelines for sorting the indices of the received data items may present major advantages and benefits compared to existing systems and methods for ordering indexed data items.

First, using a linked list to order the received data items may be highly more efficient and effective compared to a linearly arranged data structure in which the indices may be sequentially arranged. This is because in case a new index is received which is smaller than the last index stored the data structure, at least some of the data structure may need to be rearranged to make space for storing the received index in its appropriate position according to its value, in contrast adding the received index in its appropriate position in the linked list is very simple since only some node pointers need to be updated. This may significantly increase the ordering performance of the processing device, for example, reduce sorting time, increase number of simultaneously processed indices, increase an overall number of processed and sorted data items and/or the like.

Moreover, while some of the existing systems and methods may be based on a linked list, the linked list may present a major limitation in identifying the position in which each received index needs to be inserted in the linked list since the entire linked list needs to be traversed (searched) starting from the head node. By generating a plurality of linked lists, specifically shorter linked lists which may be rapidly traversed and may thus serve as shortcut lists for their respective next lower layer linked lists, traversing each linked list in its entirety may be avoided. In particular, each processing unit may traverse its respective linked list and signal a start point to its respective next lower layer processing unit which may use the signaled start point and thus focus only on the relevant segment of its respective linked list. This may further increase the ordering performance of the processing device.

Furthermore, allocating separate processing and storage resources to each of the processing units may enable the processing units to operate in parallel such that a plurality of processing units may simultaneously process a plurality of different received indices. This may further increase the ordering performance of the processing device, in particular in terms of reduced sorting time, increased number of simultaneously processed indices, increased overall number of processed and sorted data items and/or the like.

In addition, deploying the FIFO in one or more of the layers may decouple the execution of one or more of the processing pipelines from the execution of their neighboring processing pipelines thus enable faster processing pipelines to process additional index(s) while the processing pipeline of their respective next lower layers are still processing previous received indices. This may further increase the ordering performance of the processing device.

Before explaining at least one embodiment disclosed herein in detail, it is to be understood that the embodiments are not necessarily limited in its application to the details of construction and the arrangement of the components and/or methods set forth in the following description and/or illustrated in the drawings and/or the Examples. One or more of the embodiment disclosed herein are capable of other embodiments or of being practiced or carried out in various ways.

As will be appreciated by one skilled in the art, aspects of the embodiment disclosed herein may be embodied as a system, method or computer program product. Accordingly, aspects of the embodiment disclosed herein may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the embodiment disclosed herein may take the form of a computer program product embodied in one or more computer readable medium(s) having computer readable program code embodied thereon.

Any combination of one or more computer readable medium(s) may be utilized. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer program code comprising computer readable program instructions embodied on a computer readable medium may be transmitted using any appropriate medium, including but not limited to wireless, wire line, optical fiber cable, RF, etc., or any suitable combination of the foregoing.

The computer readable program instructions described herein can be downloaded to respective computing/-processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The computer readable program instructions for carrying out operations of the embodiment disclosed herein may be may be written in any combination of one or more programming languages, such as, for example, assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the embodiment disclosed herein.

Aspects of the embodiment disclosed herein are described herein with reference to flowchart illustrations and/or block diagrams of methods, apparatus (systems), and computer program products according to embodiment disclosed herein. It will be understood that each block of the flowchart illustrations and/or block diagrams, and combinations of blocks in the flowchart illustrations and/or block diagrams, can be implemented by computer readable program instructions.

The flowcharts and block diagrams in the Figures illustrate the architecture, functionality, and operation of possible implementations of systems, methods, and computer program products according to various embodiment disclosed herein. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

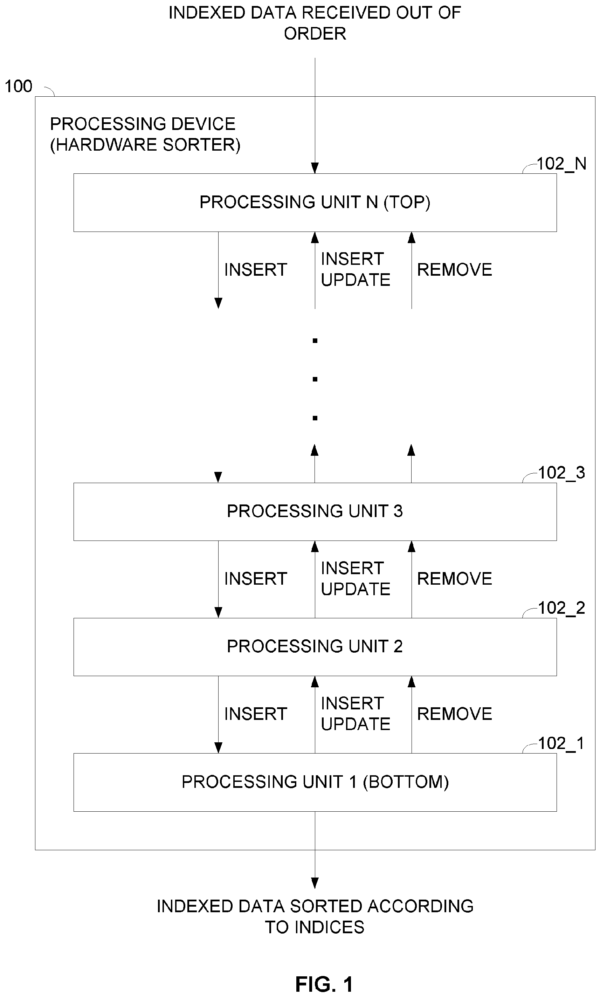

Referring now to the figures, FIG. 1 is a schematic illustration of an exemplary data processing device configured for ordering a set of data items received out of order according to indices assigned to the data items, according to some embodiments disclosed herein.

An exemplary processing device 100 may be configured to receive data items out of order and order the received data items according to indices assigned to the data items in an incremental monotonic order. In particular, the processing device 100 which is interchangeably referred to as a hardware sorter herein after may receive the indices of the data items each assigned a unique index of the indices and sort (order) the indexed data items according to their indices.

According to some embodiments, the hardware sorter 100 stores the actual data items and provides the indexed data items sorted according to their indices. However, the hardware sorter 100 may optionally, store only the indices in association with pointers to their corresponding data items which may be stored in one or more memory resources and thus accessed according to their ordered indices as provided by the hardware sorter 100.

The hardware sorter 100 may order (sort) the data items is based on generating a linked list comprising a plurality of storage nodes which provides a sequence of indices of the data items ordered according to the value of the indices starting from a smallest value index to a highest value index. Each of the nodes in the linked list may store a respective index and a pointer to its succeeding node as known in the art.

Using a linked list, the hardware sorter 100 may easily insert the indices in order even when the data items are received out of order since indices of newly received data items may be inserted in the linked list in the appropriate positions between indices of previously received data items. This is in contrast to a linearly arranged data structure (memory) in which the indices may be inserted and stored sequentially and at least part of the data structure may need to be rearranged in order to insert a new index in between previously received indices which are stored in the data structure.

Identifying the position in which a newly arrived index needs to be pushed into the linear data structure according to the value of the received index may relatively fast, typically in a magnitude of O(Log(N)) where N is the number of indices. In the linked list structure, however, identifying the position where the new index needs to be pushed into the linked list may be much more time and/or resource consuming. This is because in order to insert each received index in its appropriate position according to its value, the linked list may need to be traversed starting from the head of the linked list and until the appropriate position for inserting the respective index is identified. This operation may naturally depend on the number of nodes and may statistically be in a magnitude of O(N) where N is the number of indices that need to be stored in order in the nodes of the linked list.

In order to overcome this limitation, the hardware sorter 100 may employ a plurality of processing units 102 which may significantly improve the performance of the hardware sorter 100 by expediting identification of the position in which each newly arrived index needs to be pushed in the linked list. In fact, the position identification operation may be reduced to statistically be around a magnitude of O(1).

The hardware sorter 100 may be therefore constructed of the plurality of processing units 102, interchangeably designated processing pipelines herein, which may be hierarchically arranged in a plurality of layers one on top the other, for example, a first processing unit 102_1 at a first layer (bottom layer), a second processing unit 102_2 at a second layer, a third processing unit 102_3 at a third layer and so on to a N$^{th}$ processing unit 102_N at layer N (top layer).

As will be described herein after in detail, expediting the detection of the position for inserting each newly received index is based on descending through a plurality of linked lists generated by the plurality of processing pipelines 102 where each linked list comprises a subset of the indices provided by the linked list generated by the immediate lower layer processing pipeline 102.

This scheme requires the processing pipelines 102 communicate with each other. The processing pipelines 102 may be therefore coupled to each other via one or more interconnecting interfaces to transfer and exchange data between them. The exchanged data may include for example, one or more indices which need to be processed by lower layer processing pipelines 102 to sort them according to their value with respect to the incremental order, insertion update instructions for updating one or more indices in the linked list(s) generated by one or more higher layer processing pipelines 102, remove instructions for removing one or more indices from the linked list(s) generated by one or more of the higher layer processing pipelines 102 and/or the like.

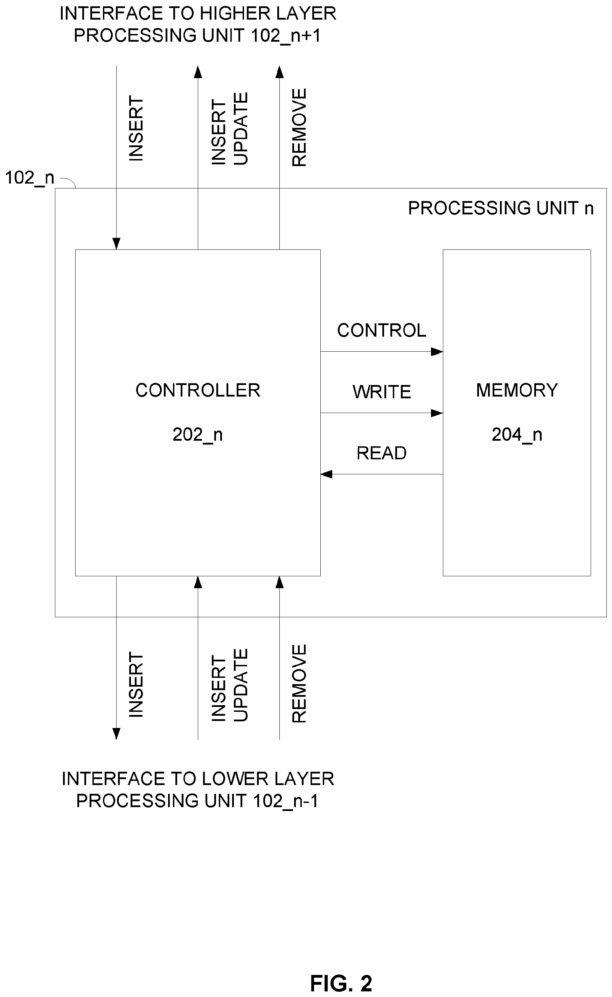

Reference is now made to FIG. 2, which is a schematic illustration of an exemplary processing unit of a data processing device configured for ordering a set of data items received out of order according to indices assigned to the data items, according to some embodiments disclosed herein.

An exemplary processing unit (processing pipeline) 102_n (n = 1, ..., N) unit such as the processing unit 102 of a hardware sorter such as the hardware sorter 100 may include a controller (control logic) 202_n and a memory array 204_n. As such, using its dedicated controller 202 and memory 204, each of the processing pipelines 102 may operate independently of the other processing pipelines 102 and hence the plurality of processing pipelines 102 may operate simultaneously in parallel.

Each of the processing pipelines 102 may generate a respective linked list. Specifically, the first (bottom layer) processing pipelines 102 generates a first linked list which provides the sequence of indices and a sequence of the data items or the pointers to the data items while each higher layer processing pipeline 102 generates a respective linked list comprising a subset of the indices provided by the linked list generated by the immediate lower layer processing pipeline 102.

Each of the linked lists generated by a respective one of the processing pipelines 102 may comprise one or more nodes, specifically storage nodes, arranged in sequence for storing the sequence of indices ordered according to their values. Each of the nodes in each of the linked lists may be configured to include a next pointer pointing to a succeeding node in the respective linked list which stores a next higher value index. For example, each of the nodes of the first linked list is configured to comprise a next pointer pointing to a succeeding node in the first linked list, each of the nodes of the second linked list is configured to comprise a next pointer pointing to a succeeding node in the second linked list and so on, where each of the nodes of the $N^{th}$ linked list is configured to comprise a next pointer pointing to a succeeding node in the $N^{th}$ linked list.

Moreover, since each linked list generated by a respective processing pipeline 102, comprises a subset of the indices provided by the linked list generated by the immediate lower layer processing pipeline 102, each linked list comprises fewer nodes compared to all the lower layer linked lists.

Each of the processing pipelines 102 may further comprise a head pointer also designated read pointer (RD_PTR) pointing to a first node of the respective linked list, a tail pointer also designated write pointer (WR_PTR) pointing to a last node of the respective linked list and an empty indicator indicating whether the respective linked list is empty or whether it comprises one or more nodes storing respective indices.

For example, the first (bottom) processing pipelines 102_1 may comprise a head pointer pointing to the first node of the first (bottom) linked list, a tail pointer pointing to a last node of the first linked list and an empty indicator indicating whether the first linked list is empty or whether it comprises one or more (full) nodes. In another example, the second processing pipelines 102_2 may comprise a head pointer pointing to the first node of the second linked list, a tail pointer pointing to a last node of the second linked list and an empty indicator indicating whether the second linked list is empty or whether it comprises one or more (full) nodes. This may apply to each of the processing pipelines 102 up to the $N^{th}$ processing pipelines 102_N.

Moreover, each node in each of the linked lists generated by all processing pipelines 102 except for the first (bottom) linked list generated by the first (bottom) processing pipeline 102_1 may further include a (down) pointer pointing to a respective corresponding node of the immediately lower layer linked list which stores (comprises) the same index value.

The hierarchical architecture and the separation of the layers may allow for the hardware implementation of each layer to follow the same design as all other layers (except the bottom layer) and with the only difference which is the size of the memory 204 which is adapted to the maximum size of the linked list of the respective layer which is reduced for each higher layer.

The hardware sorter 100 including the processing pipelines 102, for example, an Integrated Circuit (IC), an Application Specific Integrated Circuit (ASIC), a Field Programmable Grid Array (FPGA) and/or the like may be implemented at gate level using one or more hardware description languages, for example, Hardware Description Language (HDL), Very High Speed Integrated Circuit Hardware Description Language VHDL), Verilog and/or the like. This means that each of the processing pipelines 102 may execute independently at gate level speed since it is not controlled by any high level processor executing a code comprising program instructions.

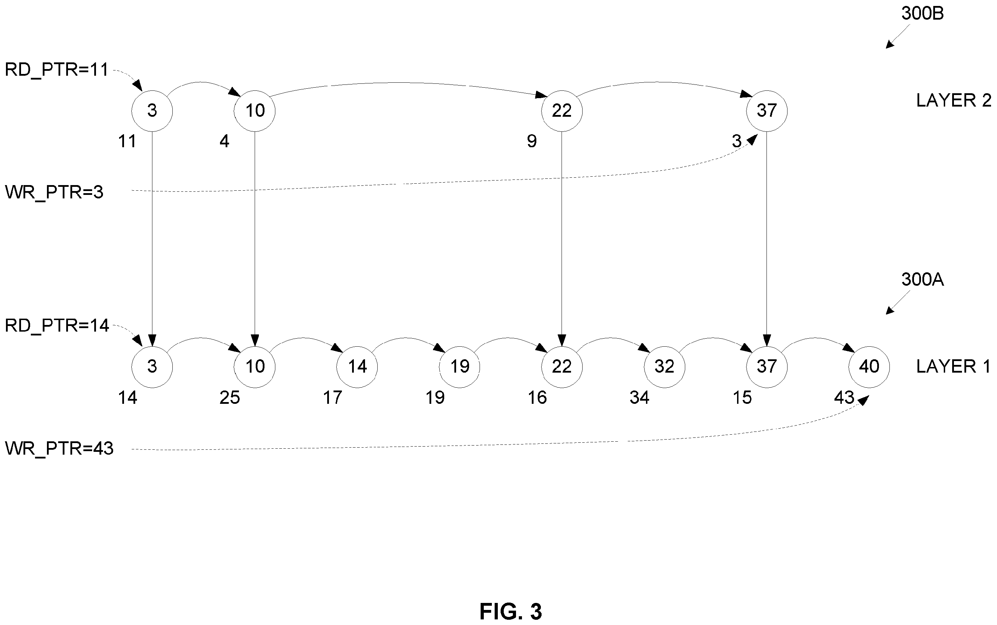

Reference is now made to FIG. 3, which is a schematic illustration of exemplary linked lists generated by processing units of a data processing device configured for ordering an exemplary set of data items received out of order, according to some embodiments disclosed herein.

An exemplary linked list 300A may be generated by a processing pipeline such as the processing pipelines 102, in particular a first (bottom) layer processing pipeline such as the processing pipeline 102_1 while an exemplary linked list 300B may be generated by another processing pipelines 102, in particular a second layer processing pipeline such as the processing pipeline 102_2.

As evident, while each node in the linked list 300A generated by the processing pipeline 102_1 comprises a respective index and a pointer to its succeeding node, each node in the linked list 300B generated by the second layer processing pipeline 102_2 further includes a down pointer pointing to a respective corresponding node of the first linked list 300A which stores (comprises) the same index value.

For example, the first node of the first (bottom) layer linked list 300A provides (stores) the index 3 and is succeeded by nodes strong index values, 10, 14, 19, 22, 32, 37 and 40 which is the last node in the bottom linked list 300A. In another example, the first node of the second layer linked list 300B provides (stores) the index 3 and is succeeded by nodes strong index values, 10, 22 and 37 which is the last node in the bottom linked list 300B.

As seen, the head pointer, RD_PTR, of the processing pipeline 102_1 which generated the first (bottom) linked list 300A points to the first node in the first linked list 300A and thus holds the address (14) which is the memory address where the first node is stored while the tail pointer, WR_PTR, of the processing pipeline 102_1 points to the last node in the first linked list 300A and thus holds the address (43) of the last node. Similarly, the head pointer, RD_PTR, of the processing pipeline 102_2 which generated the second linked list 300B points to the first node in the second linked list 300B and thus holds the address (11) of the first node while the tail pointer, WR_PTR, of the processing pipeline 102_2 points to the last node in the second linked list 300B and thus holds the address (3) of the last node.

It should be noted, that as described herein before the processing pipelines 102, for example, the processing pipeline 102_1 and the processing pipeline 102_2 have dedicated and separated memory arrays 204 and the address may therefore overlap between processing pipelines 102 since they relate to different memory arrays 204.

In order to insert each received index into the bottom layer linked list, the hardware sorter 100 may therefore use the higher layers linked lists which may be considered as shortcut lists since they may comprise significantly fewer nodes and are may be thus more rapidly traversed. As such, each linked list may be regarded recursively as a shortcut list for the linked list of its respective lower layer linked list.

The hardware sorter 100 may start from a top most layer linked list and compare the value of the received index the index(s) stored in the linked list of the top most layer to identify a start point at the next lower layer linked list. The hardware sorter 100 may then descend to the next lower layer linked list and start traversing it from the start point identified using the top most layer linked list. The hardware sorter 100 may repeat this process through the linked lists in the plurality of layers until reaching the first (bottom) layer linked list which may be traversed starting from the start point identified using the second layer linked list to identify the position in which the received index should be inserted into the bottom linked list according to its value.

Naturally, the number of nodes in each of the linked lists of the higher layers and the selection of which indices stored in these nodes may affect the performance of the hardware sorter 100 which moves between the layers' linked lists to identify the position in which the insert the received indices in the bottom layer linked list.

The hardware sorter may apply one or more methods, techniques and/or algorithms for inserting (adding) nodes into the linked list generated by one or more of the higher layers processing pipelines 102, i.e., the processing pipelines 102 other than the first processing pipeline 102_1 which generates the first linked list to include nodes for storing all the received indices.

For example, the linked lists of the higher layers may be generated by their respective processing pipelines 102 according to a predefined probability P where P < 1 such that in case there are M nodes in the first layer linked list which store M respective indices, the second layer linked list may include P*M nodes providing (storing) a subset P*M of the indices stored in the first layer linked list. For example, assuming P= ½, the second layer linked list may comprise ½ of the indices stored in the first layer linked list. This may continue such that each higher layer linked list may include a fraction P of the indices stored in its immediate lower layer linked list. For example, assuming P= ½, the third layer linked list may comprise ¼ of the indices stored in the first layer linked list and the fourth layer linked list may comprise 1/8 of the indices stored in the first layer linked list and so on.

Therefore, using the high layers linked lists the hardware sorter 100, specifically the respective processing pipelines 102 may rapidly traverse the shorter linked lists to identify a start point for starting traversing the next lower layer linked list until reaching the bottom layer linked list and traversing it starting from the respective start point to identify the position for inserting each received index.

Moreover, since the processing pipelines 102, each having its own dedicated controller 202 and dedicated memory 204, may execute and operate in parallel, multiple indices may be simultaneously processed by the plurality of processing pipelines 102 thus further expediting the sorting performance of the hardware sorter 100.

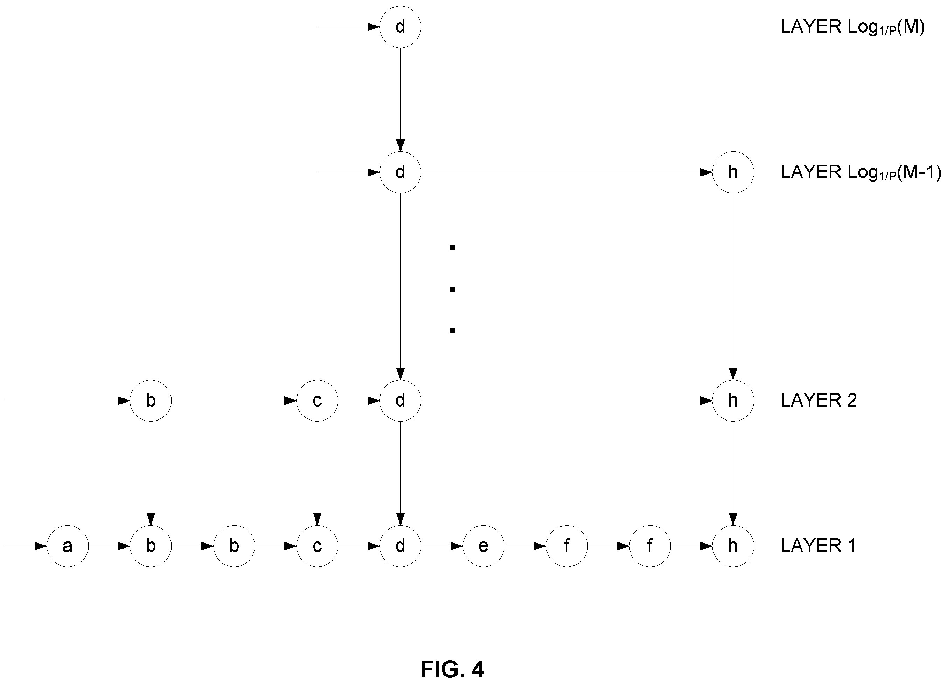

Reference is now made to FIG. 4, which is a schematic illustration of an exemplary hierarchical linked lists structure generated by processing units of a data processing device configured for ordering a set of data items received out of order, according to some embodiments disclosed herein.

An exemplary hardware sorter such as the hardware sorter 100 may comprise $Log_{1/P}(M)$ layers where M is defined to be the maximum number of indices (corresponding to the maximum number of data items) which may be ordered (sorted) simultaneously. This means that the hardware sorter 100 may include $Log_{1/P}(M)$ processing pipelines such as the processing pipelines 102 each configured to generate a respective linked list thus there may be up to $Log_{1/P}(M)$ linked lists. Typically, $Log_{1/P}(M)+1$ layers may be used, however $Log_{1/P}(M)$ layers may be sufficient.

In some scenarios, multiple data items may be associated with the same index and as such multiple nodes storing the same index value may exit in the linked list of the bottom layer and optionally in the linked lists of one or more of the higher layers, i.e., the second layer and higher. This may present an issue for the higher layers' linked lists which may include one or more node pointing (down) to nodes of the next lower layer linked list.

The hardware sorter 100 may apply one or more techniques and/or implementations to address such scenarios. For example, any of the nodes in a linked list of any lower layer may be pointed down by a corresponding node in a higher layer which stores the same index value regardless of the index value. As such, multiple nodes in a linked list of a certain layer which store the same index value may be pointed (down) by corresponding nodes in the linked list of the next higher layer. In another example, only the first node (closest to the head pointer) of multiple consecutive node storing the same index value at a lower layer may be pointed down by a corresponding node in a higher layer which stores the same index value. In another example, only the last node (closest to the tail pointer) of multiple consecutive node storing the same index value at a lower layer may be pointed down by a corresponding node in a higher layer which stores the same index value.

While any of the three optional techniques may be applied by the hardware sorter 100, the, third exemplary implementation (only last node may be pointed down) may present best performance.

As seen in FIG. 4, the first linked list of the first (bottom) layer of the exemplary hardware sorter 100 may comprise nine nodes storing all currently valid indices, specifically, a, b, b, c, d, e, f, f, h. The second linked list of the second layer may include only four nodes storing the indices b, c, d, h. As seen, while there are two nodes providing the index value b, as suggested by the second exemplary technique, only the first node storing the index value b is pointed down by a corresponding respective node in the second linked list of the second layer. There are also two nodes storing the same index value f, however none of them is pointed down by corresponding respective nodes in the second linked list of the second layer.

The linked list of the one below top layer $Log_{1/P}(M-1)$ may include, for example, two nodes storing the index values d and h while the linked list of the top most layer $Log_{1/P}(M)$ may include, for example, only one storing the index value d.

It should be notes that it is possible that the linked lists of one or more of the top most layers may be empty and comprise no nodes string no indices.

The hardware sorter 100 may insert each received index into the first (bottom) linked list generated by the first (bottom) processing pipeline 102_1 in two phases. The first phase is conducted to identify the position in the bottom linked list for inserting a new node for string the respective received index. The second phase is conducted to update one or more of the higher layers' linked lists to include a new node for received index and point down to a corresponding node in the next lower layer linked list which stores the same index value.

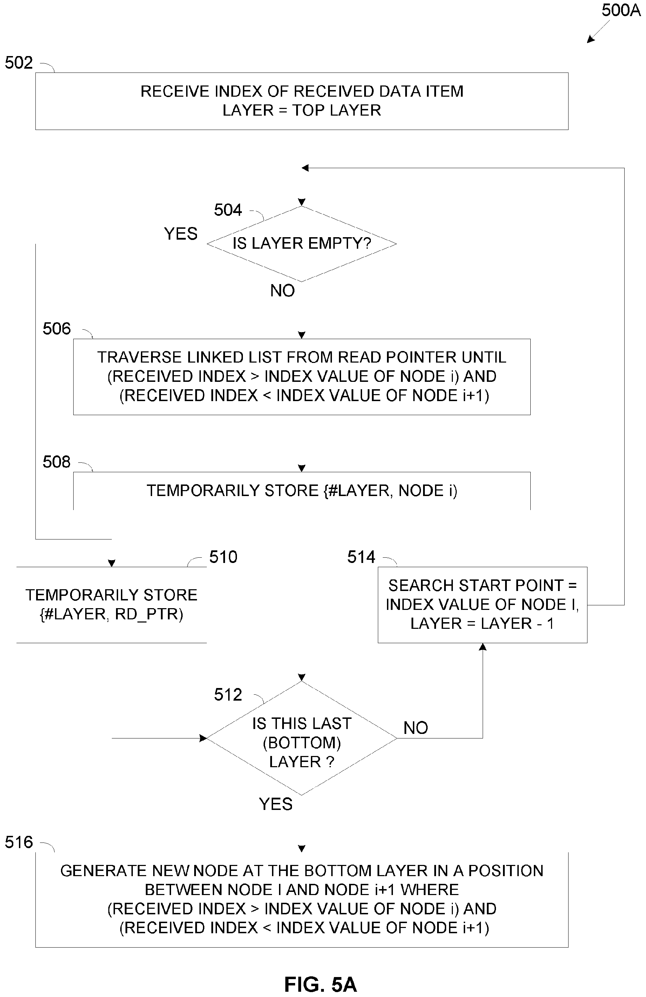

Reference is now made to FIG. 5A, which is a flow chart of an exemplary process of inserting a node corresponding to a received data item in an ordered position in a bottom linked list generated by a bottom layer processing unit of a data processing device configured for ordering a set of data items received out of order, according to some embodiments disclosed herein.

An exemplary process 500A may be executed by a hardware sorter such as the hardware sorter 100 constructed of a plurality of processing pipeline such as the processing pipeline 102 to perform the first phase of inserting each of a plurality of received indices into the first (bottom) linked list generated by a first processing pipeline such as the processing pipeline 102_1.

As described herein before, searching for the position in which the new index needs to be added at the bottom layer linked starts by traversing the top layer and gradually descending down through the layers where in each layer the respective linked list is used to identify a start point for traversing the linked list of the next lower layer. As such the processing pipeline 102 of each layer may signal a starting point to the processing pipeline 102 of the next lower layer from where the next lower layers processing pipeline 102 may start traversing its respective linked list.

The process 500A conducted for each received index is an iterative process where each iteration is conducted for the respective received index by a next lower layer processing pipeline 102 may traverse (process) its respective linked list to identify the start point for the next lower processing unit 102 to start its traversing of its respective linked list.

As shown at 502, the process 500A starts with the hardware sorter 100 receiving an index of each newly received data item of a plurality of data items which may be received out of order. Each data item of the plurality of data items is assigned with a unique index of a plurality of indices.

For example, in communication systems comprising network equipment, for example, switches, end points, routers and/or the like, packets of the same flow may travel through different paths in the network and may thus arrive out of order. Each of the packets is assigned a unique index which marks their sequence number (position) in the flow which may be used to re-order the arriving packets according to their original transmitted order. In another example, in some communication systems, packets may be assigned with a rank indicating when is arriving packet is eligible to be scheduled out of queue, and must enter a FIFO queue of packets in a position based on their rank. Since packets of higher rank may arrive after lower ranking packets which are already in the FIFO, the queue must be re-arranged according to the ranking. This mechanism is known as Push In First Out (PIFO). The rank value assigned to each packet may be therefore used as the unique index assigned to each packet for re-ordering the FIFO queue.

As the iterative process 500A starts from the top, the hardware sorter 100 may set the layer number indicating the current layer to the top layer to start traversing the layers from the top to identify a top most non-empty linked list which may be used to start processing the newly received index.

As shown at 504, which is a conditional step, in case the linked list of the current layer is empty the process 500A branched to 510 while in case the current layer's linked list is not empty the process 500A branches to 506. Determining whether the current layer's linked list is empty or not may be done based on the value of the empty indicator of the current layer's processing pipeline 102.

This step may be repeated for the linked list of each layer starting from the top layer. As shown at 510, the layer number and the RD_PTR are temporarily saved for descending to the next layer.

As shown at 506, the processing pipeline 102 of the current layer starts traversing its respective linked list (current layer's linked list) starting from the address set in its RD_PTR.

In case the linked list of the current layer is the first non-empty linked list, the RD_PTR may point to the first node of the linked list. However, in case the linked list of the current layer is not the first non-empty linked list, the RD_PTR may point to a start node identified and set by the next higher layer processing pipeline 102 in the previous iteration.

The current layer's processing pipeline 102 may traverse the nodes of its respective linked list until is finds a node i comprising an index value smaller than the received index and a stop node i+1 comprising an index value larger (greater) than the received index.

The search (traversing) in each layer may therefore end at a stop node which may be indicated by the RD_PTR (head of the list), at the at the WR_PTR (end of the list) or in any node within the linked list (middle of the list). Moreover, the search may start from the head pointer pointing to the first node of the respective linked list for the top most layer. The search may also start at the head pointer of the processing pipeline of each layer which is preceded by higher layer having empty linked lists. However, for the other layers which are preceded by a higher layer having a non-empty linked list, the search may start from the address value received form the processing pipeline 102 of the next (immediate) higher layer and stored in the RD_PTR.

As shown at 508, the current layer's processing pipeline 102 may go back to the node i and temporarily store it together with the layer's number. In particular, the current layer's processing pipeline 102 may store {Layer #, node} which indicates the node in the linked list of the next lower layer from where the processing pipeline of the next lower layer may start traversing the next lower layer linked list. In particular, the indicated node may include the value of the down pointer of the node i which points down to a corresponding node in the next lower layer storing the same index as the node i.

As shown at 512, which is a conditional step, in case the current layer is the bottom layer, i.e., the last layer to be processed, the process 500A branches to 516. In case the current layer is not the bottom layer, the process 500A branches back to 514.

As shown at 514, since the most recent layer was not the bottom layer, the process 500A may branch back to step 504 to initiate another iteration in which the processing pipeline 102 of the next lower layer may traverse and process its respective linked list. However, the RD_PTR of the next layer processing pipeline 102 may be set to value of the down pointer identified in the previous iteration for the next higher layer.

As shown at 516, when reaching the bottom layer, the bottom layer processing pipeline 102_1 may generate a new node in the bottom layer linked list at the position between node i and node i+1 identified in step 506 executed by the processing pipeline 102_1.

In the case where the value of a received index is equal to the value of an already existing index stored in one of the nodes of the bottom linked list, the processing pipeline 102_1 may generate the new node and insert it in the bottom layer linked list according to one of a plurality of implementations. For example, the processing pipeline 102_1 may insert the generated node before the first node in the bottom linked list which stores the same index as the newly received index. In another example, the processing pipeline 102_1 may insert the generated node following the last node in the bottom linked list which stores the same index as the newly received index, in another example, in case there are multiple nodes in the bottom layer linked list which store the same index as the newly received index, the processing pipeline 102_1 may insert the generated node between any two of the nodes storing the same index value.

As evident, due to the hierarchical nature of the hardware sorter 100, one or more of the iterations may be conducted in parallel by one or more of the processing pipelines 102 for different received indices since the processing and memory resources of each processing pipeline may be independent of the other processing pipelines.

For example, while the bottom layer processing pipeline 102_1 executes the process 500A for a first received index according to a start point received from the second layer processing pipeline 102, the second layer processing pipeline 102_2 may execute the process 500A for a second received index according to a start point received from the third layer processing pipeline 102_3 and so on to the top layer processing pipeline 102_N which may execute the process 500A for a Nth received index.

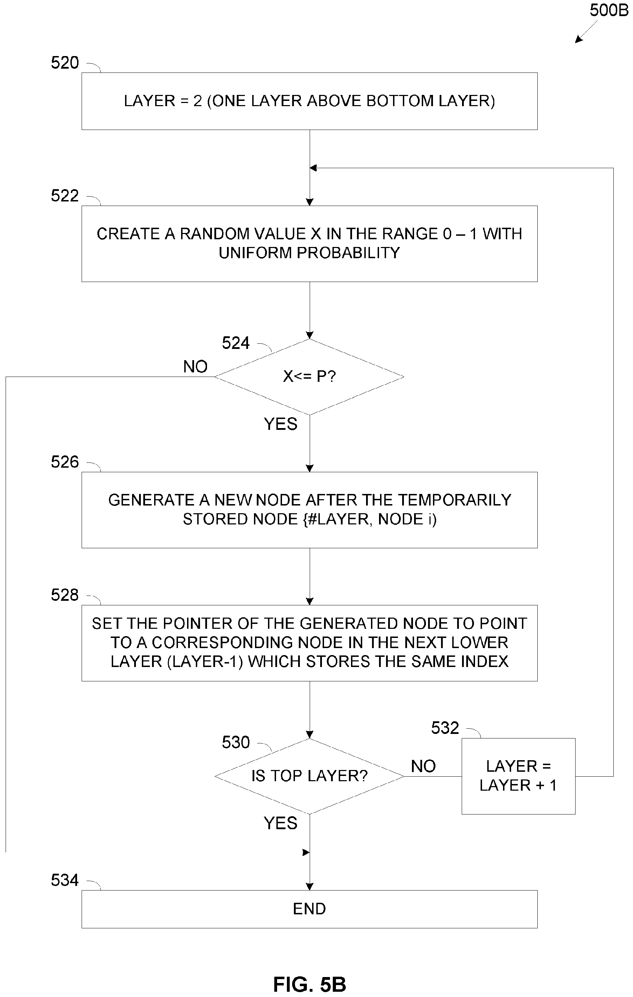

Reference is also made to FIG. 5B, which is a flow chart of an exemplary process of updating linked lists generated by higher layer processing units of a data processing device configured for ordering a set of data items received out of order, according to some embodiments disclosed herein.

An exemplary process 500B is a complementary process for the process 500A and may be executed by the hardware sorter 100 for each received index to determine whether to generate a new node in one or more higher layer linked lists for storing the received index after the new node is generated by the processing pipeline 102_1 to store the received index in the bottom linked list.

The process 500B is an iterative process where in each iteration the processing pipeline 102 of another higher layer (above the bottom layer) determines whether to generate a new node for storing the received index in the linked list of the respective layer.

As described in the process 500B, the processing pipeline 102 of one or more of the higher layers (i.e., above the bottom layer) may generate the new node for the received index according to the predefined probability P. In case a new node is generated to store the received index in the linked list of a certain layer, another new node may be generated to store the received index in the linked list next higher layer according to the predefined probability P. however, in case no new node is generated to store the received index in the linked list of a certain layer, no nodes may be generated to store the received index in the linked list of any layer higher than the certain layer.

As shown at 520, the iterative process 500B starts with the hardware sorter 100 setting the layer number to layer 2 which is the first higher layer above the bottom layer.

As shown at 522, the hardware sorter 100 may create a random value X with uniform probability in the range 0 - 1.

As shown at 524, which is a conditional step, in case the value X is greater than the predefined value P, the process 500B branches to 526. Otherwise the process 500B branches to 534 since X < P meaning that a new node will not be generated for the received index in the current layer and hence no new nodes will be generated to store the received index in any other layer higher than the current layer.

The value P defines the probability for generating a new node to store the received index in the current layer. The probability P may be therefore predefined according to one or more operational parameters, requirements and/or required performance of the hardware sorter 100. For example, in case the probability P is predefined to ½, the linked list of each layer may statistically comprise ½ of the nodes compared to the linked list of the next (immediate) lower layer. In example, in case the probability P is predefined to 1/3, the linked list of each layer may statistically comprise 1/3 of the nodes compared to the linked list of the next (immediate) lower layer. In example, in case the probability P is predefined to ¼, the linked list of each layer may statistically comprise ¼ of the nodes compared to the linked list of the next (immediate) lower layer.

As shown at 526, since X > P, the processing pipeline 102 of the current layer may generate a new node for storing the received index in the respective linked list of the current layer. Specifically, the processing pipeline 102 of the current layer may insert the generated node at the position which is stored for the current layer in step 508 of the process 500A.

As shown at 526, since X > P, the processing pipeline 102 of the current layer may generate a new node for storing the received index in the respective linked list of the current layer.

Specifically, the processing pipeline 102 of the current layer may insert the generated node at the respective linked list at the position determined by the value of the received index. However, there is no need for the processing pipeline 102 of the current layer to traverse the respective linked list again to identify that position since this search was already conducted in the process 500A and the position is temporarily stored for each layer including the current layer in step 508 of the process 500A.

As shown at 528, the processing pipeline 102 of the current layer sets the down pointer of the generated node to point to a corresponding node in the linked list of the next (immediate) lower layer storing the same received index.

Moreover, in case there are multiple nodes in the linked list of the next lower layer which store the same value as the received index, the processing pipeline 102 of the current layer may apply one or more techniques to set the down pointer. For example, the down pointer may be set to point to the first node of the next lower layer's linked list which stores the same index, to the last node of the next lower layer's linked list which stores the same index, to the node generated in the next lower layer's linked list to store the received index and/or the like.

As shown at 530, which is a conditional step, in case the current layer is the top most layer, the process 500B may branch to 534, otherwise the process 500B branches to 532.

As shown at 532, the hardware sorter 100 may set the layer number to the next higher layer and may branch back to 522 repeat the process for the next (immediate) higher layer.

As shown at 534, the process 500B ends for the respective received index.

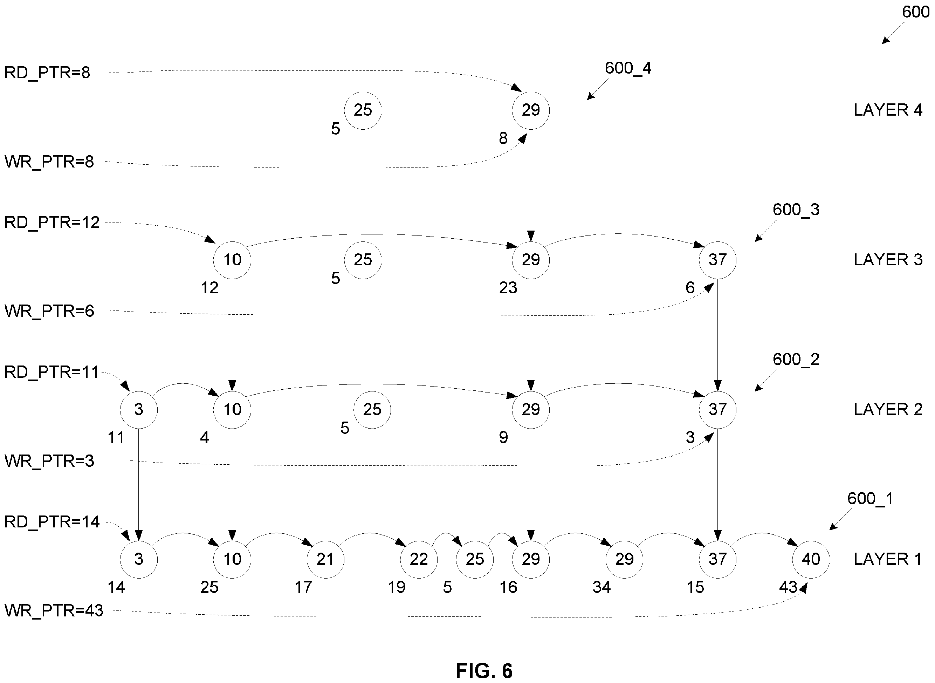

Reference is also made to FIG. 6, which is a schematic illustration of an exemplary sequence for adding a node corresponding to a received data item into a bottom linked list generated by a bottom layer processing unit of a data processing device configured for ordering a set of data items received out of order.

As exemplary sequence 600 may be followed by the processing pipelines 102 executing the processes 500A to identify a position and generate a node for storing the index of the received data item in the bottom layer linked list followed by executing the process 500B to optionally update one or more of the higher layer linked list to include the received index.

As seen, the sequence 600 relates to four exemplary linked lists 600_1, 600_2, 600_3 and 600_4 generated by respective processing pipelines 102 of 4 layers of an exemplary hardware sorter such as the hardware sorter 100.

Assuming a new index 25 is received and stored at address 5, the 4th layer processing pipeline 102 may execute the process 500A to traverse the linked list 600_4. In particular, the 4th layer processing pipeline 102 may start traversing the linked list 600_4 from the address (8) pointed by the RD_PTR of the 4th layer processing pipeline 102 until it finds a stop node storing an index value greater than 25. Since the index value 25 is smaller than the first element stored in the linked list 600_4, i.e., 29, and since the index value 25 does not exist in the linked list 600_4, the 4th layer processing pipeline 102 may temporarily set its RD_PTR to the address of the index 25 for the current layer, {#Layer=4, RP}. This means that in case a new node the will be generated to store the received index in the 4th layer linked lists 600_4 (during the process 500B), the new node will be inserted at the RD_PTR location and will be the first node of the linked lists 600_4.

Assuming the first index value in the linked lists 600_4 was 21 instead of 29, the 4th layer processing pipeline 102 may temporarily set its WR_PTR to the address of the index 25 for the current layer, {#Layer=4, RP} indicating that in case a new node the will be generated to store the received index in the 4th layer linked lists 600_4, the new node will be inserted at the WR_PTR location and will be the last node of the linked lists 600_4.

The 3rd layer processing pipeline 102 may then execute the process 500A to traverse the linked list 600_3. However, since the linked list 600_4 does not include a node storing an index smaller than the received index 25, the 3rd layer processing pipeline 102 may also start traversing the linked list 600_3 form its head node (string the value 10) at address (12) pointed by its respective RD_PTR. The 3rd layer processing pipeline 102 may end its search (traverse) at the stop node storing the index value 29 which is the first node in the linked list 600_3 storing an index value greater than the received index 25. The 3rd layer processing pipeline 102 may therefore temporarily store {#Layer=3, 10}, in particular, the address of the corresponding node in the linked list 600_2 pointed by the down pointer of the node storing the index value 10 in the linked list 600_3.

The 2nd layer processing pipeline 102 may then execute the process 500A to traverse the linked list 600_2. However, instead of starting from the head node storing the index 3 and pointed by its RD_PTR, the 2nd layer processing pipeline 102 may start traversing the linked list 600_2 form the start node storing the index 10 whose address is received from the 3rd layer processing pipeline 102. The 2nd layer processing pipeline 102 may also end its search at the stop node storing the index value 29 since it is again the first node in the linked list 600_2 storing an index value greater than the received index 25. The 2nd layer processing pipeline 102 may therefore also temporarily store {#Layer=2, 10}, in particular, the address of the corresponding node in the linked list 600_1 pointed by the down pointer of the node storing the index value 10 in the linked list 600_2.

The 1st (bottom) layer processing pipeline 102_1 may then execute the process 500A to traverse the linked list 600_1. The 1st layer processing pipeline 102_1 may also start traversing the linked list 600_1 form the start node pointed storing the index 10 whose address is received from the 2nd layer processing pipeline 102. The 1st layer processing pipeline 102_1 may also end its search at the stop node storing the index value 29 since it is again the first node in the linked list 600_1 storing an index value greater than the received index 25. The 1st layer processing pipeline 102_1 may determine that the received index value 25 is between the index value 22 and the index value 29 stored in the linked list 600_1 and may therefore generate a new node for storing the received index value 25 in the linked list 600_1 following the node (i) storing the index value 22 and the node (i+1) storing the index value 29. The 1st layer processing pipeline 102_1 may configure the newly generated node to include a next pointer pointing to the node strong the index value 29. The 1st layer processing pipeline 102_1 may further update the next node pointer of the node storing the index value 22 to point to the newly generated node storing the value 25.

The hardware sorter 100 may then execute the process 500B starting from the second layer linked list 600_2 to determine whether to add a new node for storing the received index value 25 in the linked lists of one or more of the higher layers, 600_2, 600_3 and 600_4. As stated herein before, in case a new node is not generated for the received index 25 in the second layer linked list 600_2, no new nodes are generated for the index 25 in any higher layer, specifically not in the linked lists 600_3 and 600_4. However, in case a new node is generated in the linked list 600_2 to store the received index 25, the 2nd layer processing pipeline 102 may insert the generated new node following the node storing the value 10 in the linked list 600_2. In case a new node is further generated in the linked list 600_3 to store the received index 25, the 3rd layer processing pipeline 102 may insert the generated new node following the node storing the value 10 in the linked list 600_3. In case a new node is further generated in the linked list 600_4 to store the received index 25, the 4th layer processing pipeline 102 may insert the generated new node at the head of the linked list 600_4 before the node storing the value 29.

Naturally indices are removed from the hardware sorter 100, specifically from the linked list of the bottom layer, for example, after the respective data items associate with theses indices are removed, for example, processed, discarded, expired and/or the like. While the node storing each removed index may be easily removed from the bottom layer linked list, it is possible that one or more of the higher layers linked lists may include nodes storing the removed index, in order to correctly maintain the linked lists and avoid maintaining nodes storing removed indices the hardware sorter 100 may need to explore one or more of the higher layers linked lists to identify such nodes and remove them.

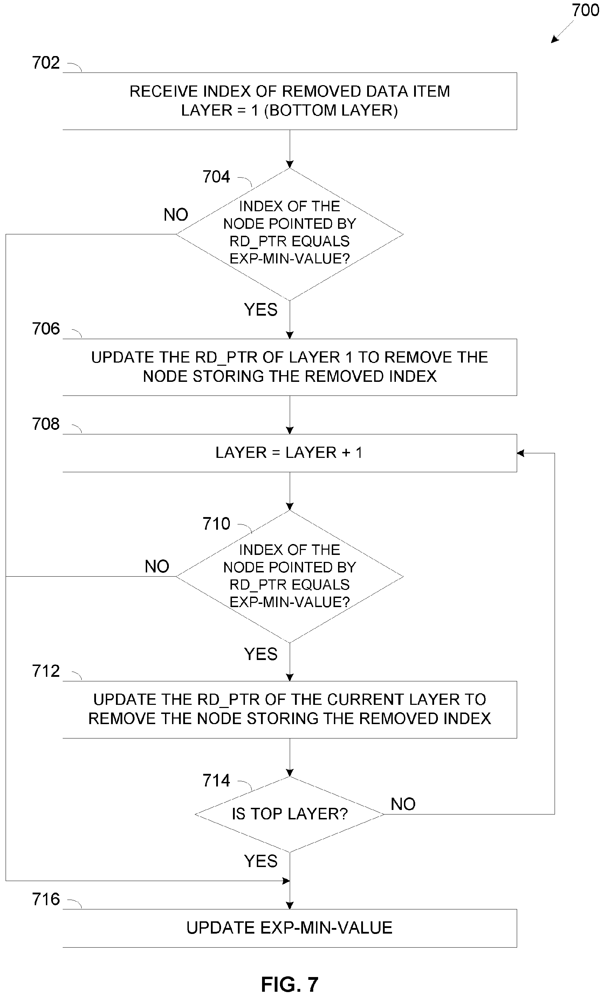

Reference is now made to FIG. 7, which is a flow chart of an exemplary process of removing a node corresponding to a removed data item from linked lists generated by processing units of a data processing device configured for ordering a set of data items received out of order, according to some embodiments disclosed herein.

As exemplary process 700 may be conducted by a hardware sorter such as the hardware sorter 100, in particular by one or more processing pipelines such as the processing pipelines 102 of the hardware sorter 100 to remove nodes storing a removed index.

As shown at 702, the process 700 starts with the hardware sorter 100 receiving an index of a removed data item. The hardware sorter 100 may set the layer number indicating the current layer to the first (bottom) layer. Since the data items may be removed according to their indices such that the lowest index data item is removed first, the removed index may be stored in the first node of the bottom layer linked list. As such the RD_PTR of the bottom layer linked list may point to the node string the lowest index value.

As shown at 704, which is a conditional step, the processing pipeline 102_1 of the bottom layer compares between the RD_PTR of the bottom layer and an "Expected Minimum Value" (EXP-NIM-VALUE) variable which is maintained by the hardware sorter 100 to indicate the current expected minimum index value.

The originating source (transmitter) of the stream of data items must be synchronized with the receiver of the data items and moreover with the hardware sorter 100 with respect to the EXP-NIM-VALUE of the indices at the beginning meaning that the Expected Minimum Value is known to the hardware sorter 100 before receiving the first data item. To this end the source of the data items and the hardware sorter 100 may apply one or more synchronization methods, protocols and/or algorithms as known in the art. After the initial synchronization, the hardware sorter 100 may update the EXP-NIM-VALUE according to removed indices such that at any given time, the EXP-NIM-VALUE is known to the hardware sorter 100, and moreover to the processing pipelines 102.

In case the RD_PTR of the bottom layer equals the EXP-NIM-VALUE, the process 700 branches to 706, otherwise the process 700 branches to 716 since the EXP-MIN-VALUE does not exist in the bottom layer linked list.

As shown at 706, in case the RD_PTR of the bottom layer equals the EXP-NIM-VALUE, the index stored by the fist node of the bottom layer linked list is considered removed and the respective node may be therefore removed from the bottom layer linked list. In such case the processing pipeline 102_1 of the bottom layer may remove the respective node and may further update its RD_PTR to point to the next node following the respective node which has now become the first node in the bottom layer linked list.

As shown at 708, the hardware sorter 100 may set the current layer to the next higher layer, i.e., Layer = Layer + 1 to initiate another iteration for the next higher layer.

As shown at 710, which is a conditional step similar to step 704, the processing pipeline 102 of the current layer compares between the RD_PTR of the current layer and the EXP-NIM-VALUE variable. In case the RD_PTR of the current layer equals the EXP-NIM-VALUE, the process 700 branches to 712, otherwise the process 700 branches 716 since the EXP-MIN-VALUE does not exist in the current layer linked list.

As shown at 712, which is similar to step 706, in case the RD_PTR of the current layer equals the EXP-NIM-VALUE, the processing pipeline 102 of the current layer may remove the respective node and may further update its RD_PTR to point to the next node following the respective node which has now become the first node in the current layer linked list. This is because as described for the bottom layer, the head of the linked list of each of the higher layers which is stored by the respective RD_PTR of the respective layer may point to the first node of the respective linked list which may store the lowest index value, these is therefore no need to search for the lowest value index and the processing pipeline 102 of the current layer may simply access the first node of the linked list of the current layer which as described stores the lowest value index.

As shown at 714, which is a conditional step, in case the current layer if the top most layer, the process 700 may branch to 716 and finish, otherwise the process 700 may branch back to 708 to initiate another iteration for the next higher layer.

As shown at 716, after the removed index is removed from the linked list of all the layers as needed (if exists), the hardware sorter 100 may increment the EXP-NIM-VALUE by 1 to update the EXP-NIM-VALUE indicating the next new expected value of the lowest index.

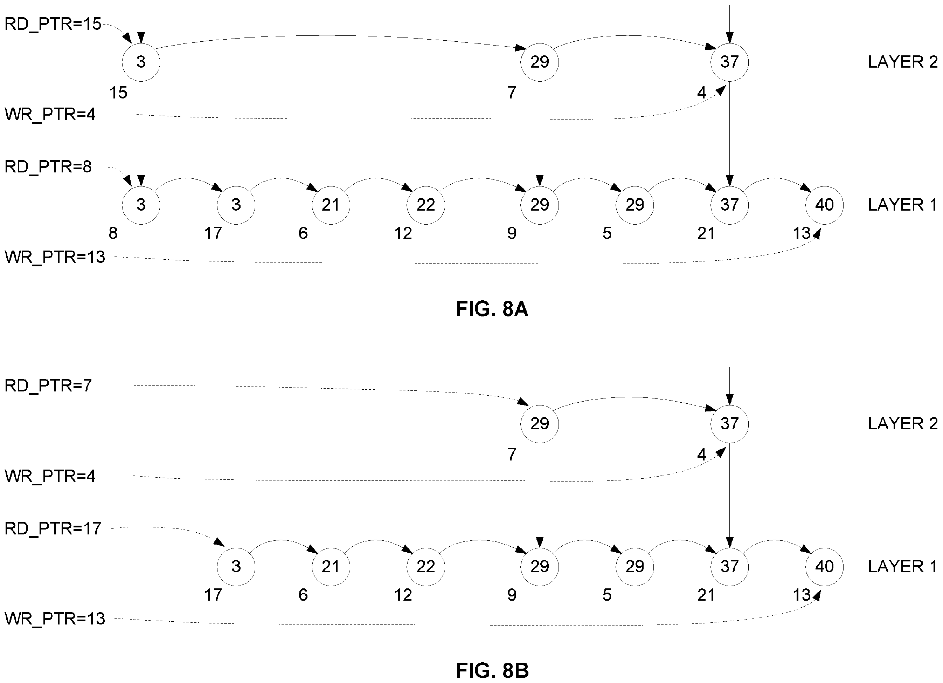

Reference is also made to FIG. 8A and FIG. 8B, which are schematic illustrations of an exemplary sequence for removing a node corresponding to a removed data item from linked lists generated by processing units of a data processing device configured for ordering a set of data items received out of order, according to some embodiments disclosed herein.

As seen in FIG. 8A, an exemplary linked list of a first (bottom) layer (layer 1) comprises multiple nodes storing index values in a monotonic incrementing order starting from a first node 3 (at address 8) storing index value. An exemplary linked list of a second layer (layer 2) comprises fewer nodes compared to the bottom layer which store a subset of the index values stored in the nodes of the bottom layer linked list. The nodes in the second layer linked list are also ordered in a monotonic incrementing order starting from a first node 3 (at address 15) storing index value 3.

As seen in FIG. 8B, assuming the data item associated with the index value 3 is removed, the index 3 must be also removed from the bottom layer linked list. The processing pipeline 102_1 of the bottom layer may therefore remove the node storing the index value 3 (at address 8) and may update its reparative RD_PTR to point to the next node following the removed node, i.e. a second node (at address 17) storing the index value 3. The processing pipeline 102_2 of the second layer may also remove the node storing the index value 3 (at address 15) and may update its reparative RD_PTR to point to the next node following the removed node, i.e. the node (at address 7) storing the index value 29.

It should be noted, the processing pipeline 102_2 of the second layer may remove the node storing the index value 3 from the second layer linked list even though there is a second node in the bottom layer linked list storing the index value 3.

Referring once again to FIG. 1 and FIG. 2, the controller 202 of each processing pipeline 102 may be therefore configured for interfacing with the processing pipelines 102 of the neighboring layers and for accessing the respective memory 204 which is configured to store the nodes providing the indices accordingly.

The controller 202 may be further configured for managing the delays in the processing pipeline 102 and for controlling the flow of indices that are received from the higher layer processing pipeline 102 which is used as a starting point for traversing the linked list of the current layer such that a new index may not be received until a currently processed index completes processing in the current layer. For example, assuming a read access to the memory 204 takes, for example, 3 clock cycles (with an additional clock cycle if error correction is applied), then the controller 202 of each layer's processing pipeline 102 may simultaneously process 3 indices in parallel. In case a 4th index arrives for processing form the processing pipeline 102 of the next (immediate) higher layer, than the controller 202 may not accept the 4th index and may hold it back until completing processing one of the first three indices. Naturally, in case the controller 202 of a certain layer holds back one or more indices, the pause may propagate to higher layers thus forming a back-pressure for receiving new indices for processing.

Applying the hierarchical architecture of the processing pipelines 102, the hardware sorter 100 ordering the received indices may achieve a statistical performance of a fixed number of cycles regardless of the number M of indices included in the bottom layer linked list. This may be achieved due to the fact that all each of the processing pipelines 102 have their own dedicated and separated memory arrays 204 allowing their respective controllers 202 to access these memory arrays 204 in parallel independently of the other processing pipelines 102.

For example, assuming that on average, two searches (traversing of the linked lists) are required identify the position of a node to be inserted into a linked list of a single layer in order according to the index value, then the average number of searches required until the index is stored in a node generated in its sorted position is $2 \times \log 1/P(M)$. Since M may be a fixed number, the number of searches on average is approximately fixed as well.

The number of required layers in the hardware sorter 100 may be therefore dictated by the value of the probability P and the value of M as follows:

$$\text{Number of layers} = \log 1/P(M)$$

Where M is the maximum number of indices that can be linked and stored in the bottom layer linked list (correlated to the maximum supported Variance) and P is the base of the log to define the number of the higher layers.

The number of nodes used to store the indices in each layer may be dictated by M and the layer's index i (i=1 is the bottom layer) as follows:

$$\text{Number of elements per layer} \geq M * P(i-1)$$

The total number of nodes in the entire hardware sorter 100 may be therefore expressed by:

$$\text{Total number of elements in the sorter} \geq M * 1/(1-P)$$

For example, applying the probability P = ½, the hardware sorter 100 may generate a statistical distribution of nodes in the linked layer of each layer such that the number of nodes in the linked list of one layer may be approximately half of the number of nodes in the next lower layer. This requires that approximately 2M nodes (on average) are required for the entire hardware sorter 100.

It should be noted that the number of nodes in each layer $\geq M * P(i-1)$. Since this is a statistical method, the memory 204 of the processing pipeline 102 of each layer should be configured to include at least slightly more than $M * P(i-1)$ nodes to compensate for statistical variations and probabilities of additional nodes that need to be inserted into the linked list of the respective layer.

Clearly if the linked list in a certain layer is fully populated, the processing pipeline 102 of the respective layer may be unable to process further index insertions and hence in higher layers regardless of the probability P.

Optionally, the hardware sorter 100 may include a pool of one or more global memory arrays which may be allocated for use by the processing pipeline of any one or more of the layers in case the memory 204 allocated to the respective processing pipeline 102 is exhausted. In order to prevent a single processing pipeline 102 or a few processing pipelines 102 from using the entire pool of global memory array(s), one or more threshold may be set to limit the volume of global memory that may be allocated to each processing pipeline 102.

The maximum number of nodes in the linked list of each layer may be pre-determined, for example, assuming the probability P is set to ½, (which is best fit to support M=2K), the number of nodes in the linked list of each layer may be as follows:

| Layer 1: | M |
| Layer 2: | $M/2 + \Delta$ |
| Layer 3: | $M/4 + \Delta$ |
| Layer 4: | $M/8 + \Delta$ |
| • | |
| • | |
| • | |
| Layer log(M)-4: | $8 + \Delta$ |
| Layer log(M)-3: | $4 + \Delta$ |
| Layer log(M)-2: | $2 + \Delta$ |
| Layer log(M)-1: | $1 + \Delta$ |

The value of $\Delta$ which is a predefined number of extra nodes that may be stored in the linked list of the respective layer may be different for each layer and may be optionally set to 0. The $\Delta$ value may be set to a higher value for the lower layers, specifically to the bottom layer where the respective linked lists may include a large number of nodes while in the higher layers where the linked lists may include less nodes, the value of $\Delta$ may be smaller. Never the less, the higher layers may have the capacity to include additional nodes in their respective linked lists, for example:

| • | |
| • | |
| • | |
| Layer log(M)-4: | 16 |
| Layer log(M)-3: | 16 |
| Layer log(M)-2: | 8 |
| Layer log(M)-1: | 4 |

Optionally, the processing units (pipelines) 102 of at least some top most layers may be merged to a single layer processing unit (pipeline) 102 such that the linked list generated and maintained by the single layer processing pipeline 102 aggregates the nodes of the linked lists generated by the at least some top most processing pipelines 102. This may reduce the number of top most layers which in some scenarios may have empty linked lists or alternatively contain linked lists comprising very few nodes making it inefficient to traverse each layer separately. Creating a single linked list for these top most layers may improve performance since only the single linked list may be traversed instead of multiple layers each comprising only very few nodes but imposing the overhead of traversing a complete layer.

Optionally, one or more of the processing units (pipelines) 102 may further include a FIFO configured to temporarily store one or more start point indices signaled by a respective higher layer processing pipeline 102. For example, the first (bottom) layer processing pipeline 102_1 may store one or more indices signaled by the second layer processing pipeline 102_2 for traversing the bottom layer linked list to identify a position for generating a node to store received indexe(s). In another example, the second layer processing pipeline 102_2 may store one or more indices signaled by the third layer processing pipeline 102_3 for traversing the second layer linked list to identify a position of received index(s).

Employing the FIFOs may allow buffering signaled indices and thus compensate for processing speed differences between the processing pipelines 102 of different layers. In particular, using the FIFOs may allow higher layer processing pipelines 102 to continue processing additional received index(s) while one or more of the lower layer processing pipelines 102 may be still busy with previous index(es).

Optionally, each node of each linked list of each layer may include multiple indices all accessible in a single access to the node thus forming an "unrolled linked list" as known in the art. For example, assuming the read cycle from the memory array 204 is 3 clocks, instead of reading a single index in a single access to a certain node, each processing pipeline 102 may read multiple indices in 3 clocks, for example, 2 indices, 4 indices and/or the like. This may significantly increase the performance of the hardware sorter 100 since each processing pipeline 102 may require reduced access time for retrieving and writing the indices in the storage nodes.

Several simulations were conducted to demonstrate the performance of the hierarchically structured hardware sorter 100. Simulation was based on the following parameters:

M = 16K ($2^{14}$) which results in 14 layers, where the number of elements in each layer is as follows ($\Delta$ is selected to be 0, i.e., no extra memory space):

| | |
|---|---|
| Layer 1 (bottom) | 16384 (16K) |
| Layer 2 | 8192 (8K) |
| Layer 3 | 4096 (4K) |
| Layer 4 | 2048 (2K) |
| Layer 5 | 1024 (1K) |
| Layer 6 | 512 |
| Layer 7 | 256 |
| Layer 8 | 128 |
| Layer 9 | 64 |
| Layer 10 | 32 |
| Layer 11 | 16 |

| | |
|---|---|
| Layer 12 | 8 |
| Layer 13 | 4 |
| Layer 14 (top) | 2 |

As evident the top most layer which should contain a linked list with a single node is removed. The simulations were conducted for the following probability values, P = ½, 1/3, ¼. The simulations were conducted for inserting over 1 million received indices associated with data items received out of order and removal of nodes storing removed indices where on average there are about 16K nodes already existing in the hardware sorter 100.

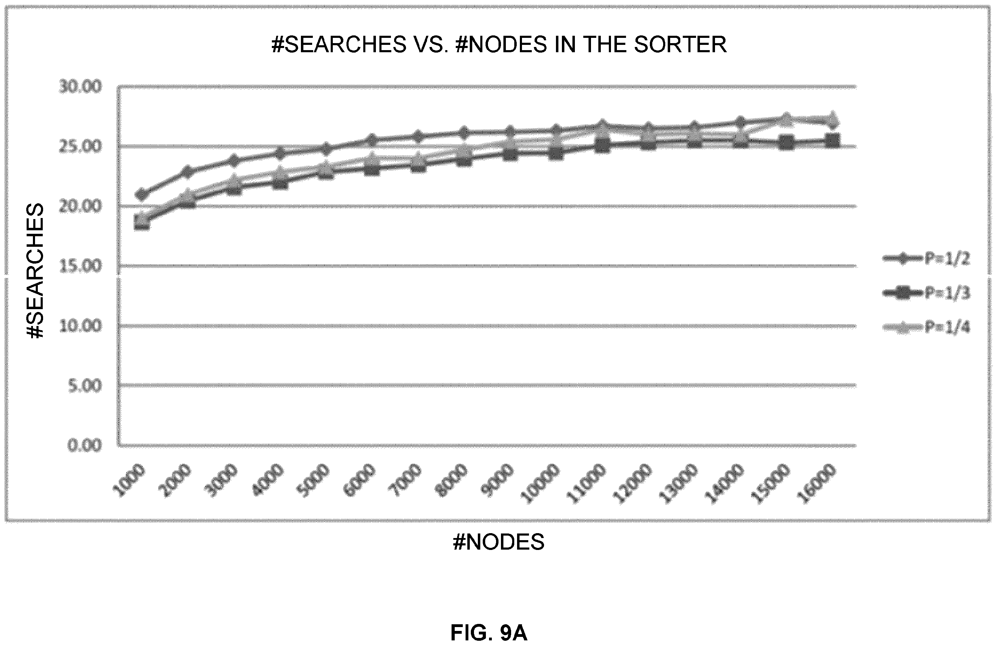

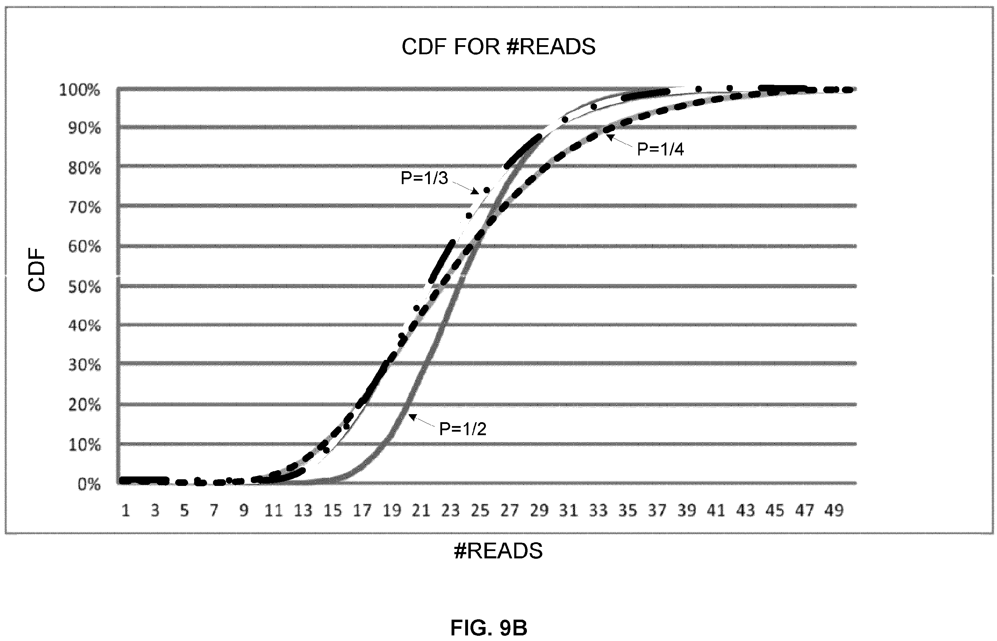

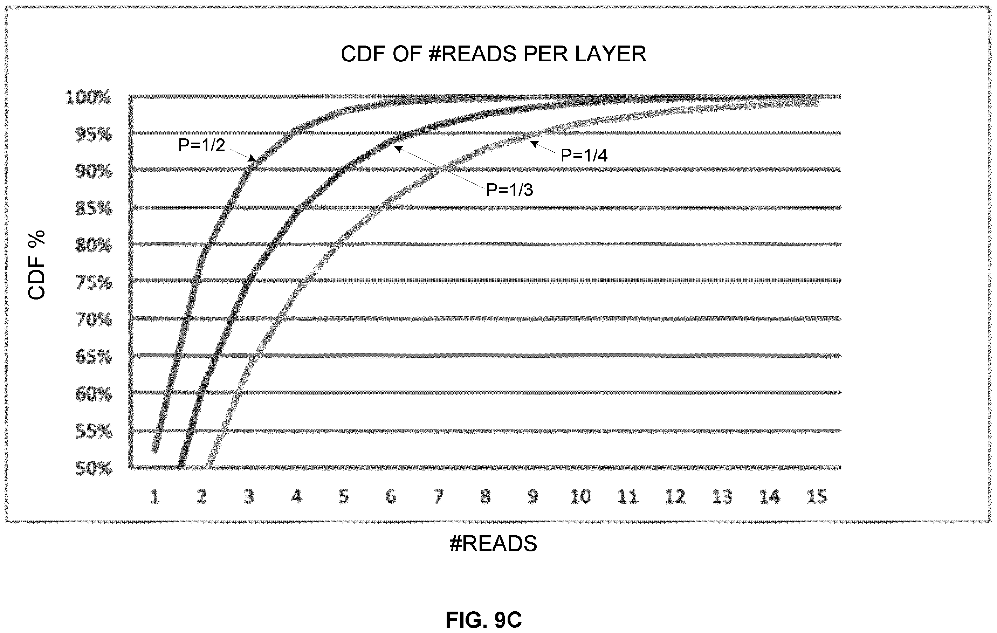

Reference is now made to FIG. 9A, FIG. 9B and FIG. 9C, which are graph charts demonstrating read sequence performance of a data processing device such as the hardware sorter 100 configured for ordering a set of data items received out of order, according to some embodiments disclosed herein.

In the simulation results expressed by the following graph charts, a 'read' sequence is defined as traversing through one node within a linked list. The number of reads refers to reads of nodes in the linked lists in all layers until a newly received index is stored in a node inserted in the bottom layer linked list in the appropriate position according to the value of the received index.

FIG. 9A is a graph chart demonstrating a number of read sequences versus a number of nodes in the linked lists generated by the processing units 102 of the hardware sorter 100. As seen, there is no significant change in the average number of read sequences for the different probability value ½, 1/3, or ¼ of P. However, these probability values may affect the number of layers and therefore the total number of nodes that are needed beyond the M nodes in the bottom layer linked list. Less nodes may be required beyond M for the smaller probability value compared to higher probability values since there may be less layers for the smaller probabilities even though the search time within each layer may be slightly increased.

For example, for P = ½ and M=16,384 (16K) there are 14 layers and additional 16K nodes while for P = ¼ there are only 7 layers and additional 5,460 nodes.

FIG. 9B is a graph chart demonstrating a Cumulative Distribution Function (CDF) of a probability of a number of read sequences required to identify an ordered position for inserting a node corresponding to a received index in the bottom layer linked list. The simulation was conducted for 8K nodes already existing in the hardware sorter 100 and for probability values P = ½, 1/3, and ¼. As seen, For P = ½ with probability > 0.95, only 32 read sequences are required to generating a new node for storing a newly received index at its exact position at the bottom layer linked list. For P = 1/3 with probability > 0.95, only 33 read sequences are required for the insertion.

FIG. 9C is a graph chart demonstrating the CDF of a probability of a number of read sequences required by each processing unit 102 of the hardware sorter 100 to generate a new node for storing a newly received index at its exact position at the bottom layer linked list. The simulation was conducted for 8K nodes already existing in the hardware sorter 100 and for probability values P = ½, 1/3, and ¼. As seen, for P = ½, with probability > 95%, the number of read sequences at each layer is ≤ 4. This may be translated to an implementation of a pipelined design with P = ½ where every 4 clock cycles a new index may be received to the hardware sorter 100 for sorting. This is a performance of O(1) regardless of the number of indices M sorted and stored in the hardware sorter 100 and not O(M) or O(logM) as may be required by existing sorting and ordering methods and systems. These result apply to a hardware sorter 100 using a dual port memory for storing the nodes of the link lists at each layer where 4 reads and 4 writes are possible in each clock cycle. Each newly received index may require 4 reads, on average with probability > 95% (which is sufficient) and 2 writes for writing the index in that layer.

The descriptions of the various embodiment disclosed herein have been presented for purposes of illustration, but are not intended to be exhaustive or limited to the embodiments disclosed. Many modifications and variations will be apparent to those of ordinary skill in the art as far as they fall within the scope of the appended claims. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment disclosed herein may include a plurality of "optional" features unless such features conflict.

Throughout this application, various embodiment disclosed herein may be presented in a range format. It should be understood that the description in range format is merely for convenience and brevity and should not be construed as an inflexible limitation on the scope of the embodiment disclosed herein. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the embodiment disclosed herein, which are, for clarity, described in the context of separate embodiments, may also be provided in combination in a single embodiment. Conversely, various features of the embodiment disclosed herein, which are, for brevity, described in the context of a single embodiment, may also be provided separately or in any suitable subcombination or as suitable in any other described embodiment disclosed herein. Certain features described in the context of various embodiments are not to be considered essential features of those embodiments, unless the embodiment is inoperative without those elements.

## Claims

1. A data processing device for ordering a set of data items which are indexed data items transmitted by a transmitter in order and received by the data processing device out of order, according to indices of the data items and for providing sequential access to the ordered set of data items, each of the data items having one of the indices,

   wherein the data processing device comprises a first processing unit (102_1) and a second processing unit (102_2) connected to each other,
   wherein the first processing unit (102_1) is configured to generate a linked list (300A), the linked list including a sequence of nodes, each node storing one of the indices corresponding to the data item having that one index, arranged in sequence for storing the indices in a sequence ordered according to their values in a monotonic order, each of the nodes in the linked list (300A) including a next pointer pointing to a succeeding node in the linked list (300A) which stores a next higher value index,

wherein generating the linked list comprises generating, for each data item in the set of data items, a respective node of the linked list,

wherein generating the respective node comprises finding a position in the linked list for generating the respective node,

wherein finding the position in the linked list for generating the respective node comprises traversing one or more existing nodes of the linked list from a start node to a stop node and comparing, for each of the traversed nodes, the index of the respective data item against the index provided by the respective traversed node,

wherein the second processing unit (102_2) is configured to signal a start node identification to the first processing unit (102_1), the start node identification identifying one of the nodes of the linked list as the start node; and

wherein the linked list generated by the first processing unit (102_1) is a first linked list (300A) and the second processing unit (102_2) is configured to generate a second linked list (300B) of nodes, wherein each of the nodes of the second linked list (300B) is configured to comprise a next pointer pointing to a succeeding node in the second linked list (300B) which stores a next higher value index,

the second linked list (300B) comprises one or more nodes associated with one or more nodes of the first linked list by each of the one or more nodes of the second linked list (300B) comprising also a pointer to a respective node of the first linked list and comprising the index provided by that respective node of the first linked list,

wherein the second linked list (300B) comprises fewer nodes than the first linked list, and the indices provided by the nodes of the second linked list (300B) form a subsequence of the sequence of indices provided by the first linked list,

wherein the second processing unit (102_2) is configured to select the start node by traversing one or more nodes of the second linked list (300B) from a start node to a stop node and is configured to compare for each of the traversed nodes, the index of the respective data item against the index stored by the respective traversed node.

2. The data processing device of claim 1, wherein the first processing unit (102_1) and the second processing unit (102_2) are configured to operate in parallel.

3. The data processing device of claim 1, wherein the stop node is a node of the linked list that stores an index greater than the index of the respective data item.

4. The data processing device of claim 1, further comprising a third processing unit (102_3) configured to generate a third linked list,

   the third linked list comprises one or more nodes associated with one or more nodes of the second linked list (300B), each of the one or more nodes of the third linked list comprising a pointer to a respective node of the second linked list (300B) and comprising the index stored by that respective node of the second linked list (300B), wherein the third linked list comprises fewer nodes than the second linked list (300B), and the indices stored by the nodes of the third linked list form a subsequence of the sequence of indices stored by the nodes of the second linked list (300B), the third processing unit (102_3) being configured to select one of the nodes of the second linked list (300B) as the start node of the second linked list (300B) and to signal a start node identification to the second processing unit (102), the start node identification identifying one of the nodes of the second linked list (300B) as the start node of the second linked list (300B).

5. The data processing device of claim 4, wherein the second processing unit (102_2) is configured to generate a new node in the second linked list (300B) corresponding to a respective node generated in the first linked list according to a predefined probability, and wherein the third processing unit (102_3) is configured to generate a new node in the third linked list corresponding to a respective node generated in the second linked list (300B) according to a predefined probability.

6. The data processing device of claim 1,

   wherein the first processing unit (102_1) is configured to remove from the first linked list each node corresponding to an index of a respective data item which is provided by the data processing device, and
   wherein the second processing unit (102_2) is configured to remove from the second linked list (300B) each node associated with a respective node removed from the first linked list.

7. The data processing device of claim 1,

wherein the first processing unit (102_1) comprises a head pointer pointing to a first node of the first linked list, a tail pointer pointing to a last node of the first linked list and an empty indicator indicating whether the first linked list comprises at least one node, and
wherein the second processing unit (102_2) comprises a head pointer pointing to a first node of the second linked list (300B), a tail pointer pointing to a last node of the second linked list (300B) and an empty indicator indicating whether the second linked list (300B) comprises at least one node.

8. The data processing device of any one of the preceding claims, wherein the first processing unit (102_1) and the second processing unit (102_2) each comprise a memory (204) and a controller (202) connected to the memory (204).

9. The data processing device of any of the previous claims, wherein the data processing device is implemented at gate level using at least one hardware description language.

10. The data processing device of any of the previous claims,

wherein at least the first processing unit (102_1) further comprises a First-In-First-Out, FIFO, unit configured to temporarily store at least one start node start point indices signaled by the second processing unit (102_2)

11. The data processing device of claim 1, wherein each of the nodes is further configured to store multiple indices all accessible in a single access to the node.

12. A method, carried out by a data processing device, of ordering a set of data items which are indexed data items transmitted by a transmitter in order and received by the data processing device out of order, according to indices of the data items and for providing sequential access to the ordered set of data items, each of the data items having one of the indices, wherein the ordering is done using the data processing device comprising a first processing unit (102_1) and a second processing unit (102_2) connected to each other,

wherein the first processing unit (102_1) generates a linked list (300A), the linked list (300A) including a sequence of nodes, each node storing one of the indices corresponding to the data item having that one index, arranged in sequence for storing the indices in a sequence ordered according to their value in a monotonic order, each of the nodes in the linked list (300A) including a next pointer pointing to a succeeding node in the linked list (300A) which stores a next higher value index,
wherein generating the linked list comprises generating, for each data item in the set of data items, a respective node of the linked list,
wherein generating the respective node comprises finding a position in the linked list for generating the respective node,
wherein finding the position in the linked list for generating the respective node comprises traversing one or more existing nodes of the linked list from a start node to a stop node and comparing, for each of the traversed nodes, the index of the respective data item against the index provided by the respective traversed node,
wherein the second processing unit (102_2) signals a start node identification to the first processing unit (102_1) the start node identification identifying one of the nodes of the linked list as the start node; and
wherein the linked list generated by the first processing unit (102_1) is a first linked list and the second processing unit (102_2)
generates a second linked list (300B) of nodes, wherein each of the nodes of the second linked list (300B) is configured to comprise a next pointer pointing to a succeeding node in the second linked list (300B) which stores a next higher value index,
the second linked list (300B) comprises one or more nodes associated with one or more nodes of the first linked list by each of the one or more nodes of the second linked list (300B) comprising also a pointer to a respective node of the first linked list and comprising the index
provided by that respective node of the first linked list,
wherein the second linked list (300B) comprises fewer nodes than the first linked list, and the indices provided by the nodes of the second linked list (300B) form a subsequence of the sequence of indices provided by the first linked list,
wherein the second processing unit (102_2) selects the start node by traversing one or more nodes of the second linked list (300B) from a start node to a stop node and compares, for each of the traversed nodes, the index of the respective data item against the index stored by the respective traversed node.

**Patentansprüche**

1. Datenverarbeitungsgerät zum Ordnen eines Satzes von Datenelementen, die indizierte Datenelemente sind, die durch einen Sender in Reihenfolge gesendet und durch das Datenverarbeitungsgerät außerhalb der Reihenfolge empfangen werden, gemäß Indizes der Datenelemente und zum Bereitstellen eines sequenziellen Zugriffs auf den geordneten Satz von Datenelementen, wobei jedes der Datenelemente einen der Indizes aufweist,

   wobei das Datenverarbeitungsgerät eine erste Verarbeitungseinheit (102_1) und eine zweite Verarbeitungseinheit (102_2) umfasst, die miteinander verbunden sind, wobei die erste Verarbeitungseinheit (102_1) dazu konfiguriert ist, eine verknüpfte Liste (300A) zu erzeugen, wobei die verknüpfte Liste eine Sequenz von Knoten umfasst, wobei jeder Knoten einen der Indizes speichert, der dem Datenelement entspricht, das den einen Index aufweist, der in einer Sequenz zum Speichern der Indizes in einer Sequenz angeordnet ist, die gemäß ihren Werten in einer monotonen Reihenfolge geordnet ist, wobei jeder der Knoten in der verknüpften Liste (300A) einen nächsten Zeiger umfasst, der auf einen nachfolgenden Knoten in der verknüpften Liste (300A) zeigt, der einen Index eines nächsthöheren Werts speichert,
   wobei das Erzeugen der verknüpften Liste Erzeugen, für jedes Datenelement in dem Satz von Datenelementen, eines jeweiligen Knotens der verknüpften Liste umfasst, wobei das Erzeugen des jeweiligen Knotens Auffinden einer Position in der verknüpften Liste zum Erzeugen des jeweiligen Knotens umfasst,
   wobei das Auffinden der Position in der verknüpften Liste zum Erzeugen des jeweiligen Knotens Durchlaufen eines oder mehrerer bestehender Knoten der verknüpften Liste von einem Startknoten zu einem Stoppknoten und Vergleichen, für jeden der durchlaufenen Knoten, des Index des jeweiligen Datenelements mit dem durch den jeweiligen durchlaufenen Knoten bereitgestellten Index umfasst,
   wobei die zweite Verarbeitungseinheit (102_2) dazu konfiguriert ist, eine Startknotenidentifikation zu der ersten Verarbeitungseinheit (102_1) zu signalisieren, wobei die Startknotenidentifikation einen der Knoten der verknüpften Liste als den Startknoten identifiziert; und
   wobei die durch die erste Verarbeitungseinheit (102_1) erzeugte verknüpfte Liste eine erste verknüpfte Liste (300A) ist und die zweite Verarbeitungseinheit (102_2) dazu konfiguriert ist, eine zweite verknüpfte Liste (300B) von Knoten zu erzeugen, wobei jeder der Knoten der zweiten verknüpften Liste (300B) dazu konfiguriert ist, einen nächsten Zeiger zu umfassen, der auf einen nachfolgenden Knoten in der zweiten verknüpften Liste (300B) zeigt, der einen Index eines nächsthöheren Werts speichert, wobei die zweite verknüpfte Liste (300B) einen oder mehrere Knoten umfasst, die mit einem oder mehreren Knoten der ersten verknüpften Liste assoziiert sind, indem jeder des einen oder der mehreren Knoten der zweiten verknüpften Liste (300B) auch einen Zeiger auf einen jeweiligen Knoten der ersten verknüpften Liste umfasst und den durch den jeweiligen Knoten der ersten verknüpften Liste bereitgestellten Index umfasst, wobei die zweite verknüpfte Liste (300B) weniger Knoten als die erste verknüpfte Liste umfasst und die durch die Knoten der zweiten verknüpften Liste (300B) bereitgestellten Indizes eine Teilsequenz der durch die erste verknüpfte Liste bereitgestellten Sequenz von Indizes bilden,
   wobei die zweite Verarbeitungseinheit (102_2) dazu konfiguriert ist, den Startknoten durch Durchlaufen eines oder mehrerer Knoten der zweiten verknüpften Liste (300B) von einem Startknoten zu einem Stoppknoten auszuwählen, und dazu konfiguriert ist, für jeden der durchlaufenen Knoten den Index des jeweiligen Datenelements mit dem durch den jeweiligen durchlaufenen Knoten gespeicherten Index zu vergleichen.

2. Datenverarbeitungsgerät nach Anspruch 1, wobei die erste Verarbeitungseinheit (102_1) und die zweite Verarbeitungseinheit (102_2) dazu konfiguriert sind, parallel zu arbeiten.

3. Datenverarbeitungsgerät nach Anspruch 1, wobei der Stoppknoten ein Knoten der verknüpften Liste ist, der einen Index speichert, der größer als der Index des jeweiligen Datenelements ist.

4. Datenverarbeitungsgerät nach Anspruch 1, ferner umfassend eine dritte Verarbeitungseinheit (102_3), die dazu konfiguriert ist, eine dritte verknüpfte Liste zu erzeugen,

   wobei die dritte verknüpfte Liste einen oder mehrere Knoten umfasst, die mit einem oder mehreren Knoten der zweiten verknüpften Liste (300B) assoziiert sind, wobei jeder des einen oder der mehreren Knoten der dritten verknüpften Liste einen Zeiger auf einen jeweiligen Knoten der zweiten verknüpften Liste (300B) umfasst und den durch diesen jeweiligen Knoten der zweiten verknüpften Liste (300B) gespeicherten Index umfasst,
   wobei die dritte verknüpfte Liste weniger Knoten als die zweite verknüpfte Liste (300B) umfasst und die durch die Knoten der dritten verknüpften Liste gespeicherten Indizes eine Teilsequenz der Sequenz von Indizes bilden, die durch die Knoten der zweiten verknüpften Liste (300B) gespeichert sind, wobei die dritte Verarbeitungseinheit (102_3) dazu konfiguriert ist, einen der Knoten der zweiten verknüpften Liste (300B) als den Startknoten der zweiten verknüpften Liste (300B) auszuwählen und eine Startknotenidentifikation zu der zweiten Verarbeitungseinheit (102) zu signalisieren, wobei die Startknotenidentifikation einen der Knoten der zweiten verknüpften Liste (300B) als den Startknoten der zweiten verknüpften Liste (300B) identifiziert.

5.  Datenverarbeitungsgerät nach Anspruch 4,

wobei die zweite Verarbeitungseinheit (102_2) dazu konfiguriert ist, einen neuen Knoten in der zweiten verknüpften Liste (300B) zu erzeugen, der einem jeweiligen Knoten entspricht, der in der ersten verknüpften Liste gemäß einer vordefinierten Wahrscheinlichkeit erzeugt wurde, und
wobei die dritte Verarbeitungseinheit (102_3) dazu konfiguriert ist, einen neuen Knoten in der dritten verknüpften Liste zu erzeugen, der einem jeweiligen Knoten entspricht, der in der zweiten verknüpften Liste (300B) gemäß einer vordefinierten Wahrscheinlichkeit erzeugt wurde.

6.  Datenverarbeitungsgerät nach Anspruch 1,

wobei die erste Verarbeitungseinheit (102_1) dazu konfiguriert ist, aus der ersten verknüpften Liste jeden Knoten zu entfernen, der einem Index eines jeweiligen Datenelements entspricht, das durch das Datenverarbeitungsgerät bereitgestellt wurde, und
wobei die zweite Verarbeitungseinheit (102_2) dazu konfiguriert ist, aus der zweiten verknüpften Liste (300B) jeden Knoten zu entfernen, der mit einem jeweiligen Knoten assoziiert ist, der aus der ersten verknüpften Liste entfernt wurde.

7.  Datenverarbeitungsgerät nach Anspruch 1,

wobei die erste Verarbeitungseinheit (102_1) einen Kopfzeiger, der auf einen ersten Knoten der ersten verknüpften Liste zeigt, einen Endzeiger, der auf einen letzten Knoten der ersten verknüpften Liste zeigt, und eine Leerheitsanzeige umfasst, die anzeigt, ob die erste verknüpfte Liste mindestens einen Knoten umfasst, und
wobei die zweite Verarbeitungseinheit (102_2) einen Kopfzeiger, der auf einen ersten Knoten der zweiten verknüpften Liste (300B) zeigt, einen Endzeiger, der auf einen letzten Knoten der zweiten verknüpften Liste (300B) zeigt, und eine Leerheitsanzeige umfasst, die anzeigt, ob die zweite verknüpfte Liste (300B) mindestens einen Knoten umfasst.

8.  Datenverarbeitungsgerät nach einem der vorhergehenden Ansprüche,
wobei die erste Verarbeitungseinheit (102_1) und die zweite Verarbeitungseinheit (102_2) jeweils einen Speicher (204) und eine mit dem Speicher (204) verbundene Steuerung (202) umfassen.

9.  Datenverarbeitungsgerät nach einem der vorhergehenden Ansprüche, wobei das Datenverarbeitungsgerät auf Gateebene unter Verwendung mindestens einer Hardwarebeschreibungssprache implementiert ist.

10. Datenverarbeitungsgerät nach einem der vorhergehenden Ansprüche,
wobei mindestens die erste Verarbeitungseinheit (102_1) ferner eine "First-In-First-Out"-, FIFO-, Einheit umfasst, die dazu konfiguriert ist, Startpunktindizes mindestens eines Startknotens temporär zu speichern, die durch die zweite Verarbeitungseinheit (102_2) signalisiert werden.

11. Datenverarbeitungsgerät nach Anspruch 1, wobei jeder der Knoten ferner dazu konfiguriert ist, mehrere Indizes zu speichern, auf die alle in einem einzelnen Zugriff auf den Knoten zugegriffen werden kann.

12. Verfahren, das durch ein Datenverarbeitungsgerät ausgeführt wird, zum Ordnen eines Satzes von Datenelementen, die indizierte Datenelemente sind, die durch einen Sender in Reihenfolge gesendet und durch das Datenverarbeitungsgerät außerhalb der Reihenfolge empfangen werden, gemäß Indizes der Datenelemente und zum Bereitstellen eines sequenziellen Zugriffs auf den geordneten Satz von Datenelementen, wobei jedes der Datenelemente einen der Indizes aufweist, wobei das Ordnen unter Verwendung des Datenverarbeitungsgeräts erfolgt, das eine erste Verarbeitungseinheit (102_1) und eine zweite Verarbeitungseinheit (102_2) umfasst, die miteinander verbunden sind,

wobei die erste Verarbeitungseinheit (102_1) eine verknüpfte Liste (300A) erzeugt, wobei die verknüpfte Liste (300A) eine Sequenz von Knoten umfasst, wobei jeder Knoten einen der Indizes speichert, der dem Datenelement entspricht, das den einen Index aufweist, der in einer Sequenz zum Speichern der Indizes in einer Sequenz angeordnet ist, die gemäß ihrem Wert in einer monotonen Reihenfolge geordnet ist, wobei jeder der Knoten in der verknüpften Liste (300A) einen nächsten Zeiger umfasst, der auf einen nachfolgenden Knoten in der verknüpften Liste (300A) zeigt, der einen Index eines nächsthöheren Werts speichert,

wobei das Erzeugen der verknüpften Liste Erzeugen, für jedes Datenelement in dem Satz von Datenelementen, eines jeweiligen Knotens der verknüpften Liste umfasst, wobei das Erzeugen des jeweiligen Knotens Auffinden einer Position in der verknüpften Liste zum Erzeugen des jeweiligen Knotens umfasst,

wobei das Auffinden der Position in der verknüpften Liste zum Erzeugen des jeweiligen Knotens Durchlaufen eines oder mehrerer bestehender Knoten der verknüpften Liste von einem Startknoten zu einem Stoppknoten und Vergleichen, für jeden der durchlaufenen Knoten, des Index des jeweiligen Datenelements mit dem durch den jeweiligen durchlaufenen Knoten bereitgestellten Index umfasst,

wobei die zweite Verarbeitungseinheit (102_2) eine Startknotenidentifikation zu der ersten Verarbeitungseinheit (102_1) signalisiert, wobei die Startknotenidentifikation einen der Knoten der verknüpften Liste als den Startknoten identifiziert; und

wobei die durch die erste Verarbeitungseinheit (102_1) erzeugte verknüpfte Liste eine erste verknüpfte Liste ist und die zweite Verarbeitungseinheit (102_2) eine zweite verknüpfte Liste (300B) von Knoten erzeugt, wobei jeder der Knoten der zweiten verknüpften Liste (300B) dazu konfiguriert ist, einen nächsten Zeiger zu umfassen, der auf einen nachfolgenden Knoten in der zweiten verknüpften Liste (300B) zeigt, der einen Index eines nächsthöheren Werts speichert,

wobei die zweite verknüpfte Liste (300B) einen oder mehrere Knoten umfasst, die mit einem oder mehreren Knoten der ersten verknüpften Liste assoziiert sind, indem jeder des einen oder der mehreren Knoten der zweiten verknüpften Liste (300B) auch einen Zeiger auf einen jeweiligen Knoten der ersten verknüpften Liste umfasst und den durch diesen jeweiligen Knoten der ersten verknüpften Liste bereitgestellten Index umfasst, wobei die zweite verknüpfte Liste (300B) weniger Knoten als die erste verknüpfte Liste umfasst und die durch die Knoten der zweiten verknüpften Liste (300B) bereitgestellten Indizes eine Teilsequenz der durch die erste verknüpfte Liste bereitgestellten Sequenz von Indizes bilden,

wobei die zweite Verarbeitungseinheit (102_2) den Startknoten durch Durchlaufen eines oder mehrerer Knoten der zweiten verknüpften Liste (300B) von einem Startknoten zu einem Stoppknoten auswählt und für jeden der durchlaufenen Knoten den Index des jeweiligen Datenelements mit dem durch den jeweiligen durchlaufenen Knoten gespeicherten Index vergleicht.

## Revendications

1. Dispositif de traitement de données pour ordonner un ensemble d'éléments de données qui sont des éléments de données indexés transmis par un dispositif de transmission dans l'ordre et reçus par le dispositif de traitement de données dans le désordre, selon des indices des éléments de données et pour fournir un accès séquentiel à l'ensemble ordonné d'éléments de données, chacun des éléments de données ayant l'un des indices,

dans lequel le dispositif de traitement de données comprend une première unité de traitement (102_1) et une deuxième unité de traitement (102_2) connectées l'une à l'autre,

dans lequel la première unité de traitement (102_1) est configurée pour générer une liste chaînée (300A), la liste chaînée incluant une séquence de nœuds, chaque nœud stockant l'un des indices correspondant à l'élément de données ayant cet indice, agencé en séquence pour stocker les indices en une séquence ordonnée selon leurs valeurs dans un ordre monotone, chacun des nœuds dans la liste chaînée (300A) incluant un prochain pointeur pointant vers un nœud suivant dans la liste chaînée (300A) qui stocke un prochain indice de valeur plus élevée,

dans lequel la génération de la liste chaînée comprend la génération, pour chaque élément de données dans l'ensemble d'éléments de données, d'un nœud respectif de la liste chaînée,

dans lequel la génération du nœud respectif comprend le fait de trouver une position dans la liste chaînée pour générer le nœud respectif,

dans lequel le fait de trouver la position dans la liste chaînée pour générer le nœud respectif comprend la traversée d'un ou de plusieurs nœuds existants de la liste chaînée d'un nœud de départ à un nœud d'arrêt et la comparaison, pour chacun des nœuds traversés, de l'indice de l'élément de données respectif à l'indice fourni par le nœud traversé respectif,

dans lequel la deuxième unité de traitement (102_2) est configurée pour signaler une identification de nœud de départ à la première unité de traitement (102_1), l'identification de nœud de départ identifiant l'un des nœuds de la liste chaînée en tant que nœud de départ ; et

dans lequel la liste chaînée générée par la première unité de traitement (102_1) est une première liste chaînée (300A) et la deuxième unité de traitement (102_2) est configurée pour générer une deuxième liste chaînée (300B) de nœuds, dans lequel chacun des nœuds de la deuxième liste chaînée (300B) est configuré pour comprendre un prochain pointeur pointant vers un nœud suivant dans la deuxième liste chaînée (300B) qui stocke un prochain indice de valeur plus élevée,

la deuxième liste chaînée (300B) comprend un ou plusieurs nœuds associés à un ou plusieurs nœuds de la première liste chaînée par chacun des un ou plusieurs nœuds de la deuxième liste chaînée (300B) comprenant également un pointeur vers un nœud respectif de la première liste chaînée et comprenant l'indice fourni par ce nœud respectif de la première liste chaînée,

dans lequel la deuxième liste chaînée (300B) comprend moins de nœuds que la première liste chaînée, et les indices fournis par les nœuds de la deuxième liste chaînée (300B) forment une sous-séquence de la séquence d'indices fournie par la première liste chaînée,

dans lequel la deuxième unité de traitement (102_2) est configurée pour sélectionner le nœud de départ en traversant un ou plusieurs nœuds de la deuxième liste chaînée (300B) d'un nœud de départ à un nœud d'arrêt et est configurée pour comparer, pour chacun des nœuds traversés, l'indice de l'élément de données respectif à l'indice stocké par le nœud traversé respectif.

2. Dispositif de traitement de données selon la revendication 1, dans lequel la première unité de traitement (102_1) et la deuxième unité de traitement (102_2) sont configurées pour fonctionner en parallèle.

3. Dispositif de traitement de données selon la revendication 1, dans lequel le nœud d'arrêt est un nœud de la liste chaînée qui stocke un indice supérieur à l'indice de l'élément de données respectif.

4. Dispositif de traitement de données selon la revendication 1, comprenant en outre une troisième unité de traitement (102_3) configurée pour générer une troisième liste chaînée,

la troisième liste chaînée comprend un ou plusieurs nœuds associés à un ou plusieurs nœuds de la deuxième liste chaînée (300B), chacun des un ou plusieurs nœuds de la troisième liste chaînée comprenant un pointeur vers un nœud respectif de la deuxième liste chaînée (300B) et comprenant l'indice stocké par ce nœud respectif de la deuxième liste chaînée (300B),

dans lequel la troisième liste chaînée comprend moins de nœuds que la deuxième liste chaînée (300B), et les indices stockés par les nœuds de la troisième liste chaînée forment une sous-séquence de la séquence d'indices stockés par les nœuds de la deuxième liste chaînée (300B), la troisième unité de traitement (102_3) étant configurée pour sélectionner l'un des nœuds de la deuxième liste chaînée (300B) en tant que nœud de départ de la deuxième liste chaînée (300B) et pour signaler une identification de nœud de départ à la deuxième unité de traitement (102), l'identification de nœud de départ identifiant l'un des nœuds de la deuxième liste chaînée (300B) en tant que nœud de départ de la deuxième liste chaînée (300B).

5. Dispositif de traitement de données selon la revendication 4,
dans lequel la deuxième unité de traitement (102_2) est configurée pour générer un nouveau nœud dans la deuxième liste chaînée (300B) correspondant à un nœud respectif généré dans la première liste chaînée selon une probabilité prédéfinie, et dans lequel la troisième unité de traitement (102_3) est configurée pour générer un nouveau nœud dans la troisième liste chaînée correspondant à un nœud respectif généré dans la deuxième liste chaînée (300B) selon une probabilité prédéfinie.

6. Dispositif de traitement de données selon la revendication 1,

dans lequel la première unité de traitement (102_1) est configurée pour retirer de la première liste chaînée chaque nœud correspondant à un indice d'un élément de données respectif qui est fourni par le dispositif de traitement de données, et

dans lequel la deuxième unité de traitement (102_2) est configurée pour retirer de la deuxième liste chaînée (300B) chaque nœud associé à un nœud respectif retiré de la première liste chaînée.

7. Dispositif de traitement de données selon la revendication 1,

dans lequel la première unité de traitement (102_1) comprend un pointeur de tête pointant vers un premier nœud de la première liste chaînée, un pointeur de queue pointant vers un dernier nœud de la première liste chaînée et un indicateur vide indiquant si la première liste chaînée comprend au moins un nœud, et

dans lequel la deuxième unité de traitement (102_2) comprend un pointeur de tête pointant vers un premier nœud de la deuxième liste chaînée (300B), un pointeur de queue pointant vers un dernier nœud de la deuxième liste chaînée (300B) et un indicateur vide indiquant si la deuxième liste chaînée (300B) comprend au moins un nœud.

8. Dispositif de traitement de données selon l'une quelconque des revendications précédentes, dans lequel la première unité de traitement (102_1) et la deuxième unité de traitement (102_2) comprennent chacune une mémoire (204) et un dispositif de commande (202) connecté à la mémoire (204).

9. Dispositif de traitement de données selon l'une quelconque des revendications précédentes, dans lequel le dispositif de traitement de données est mis en œuvre au niveau porte à l'aide d'au moins un langage de description de matériel.

10. Dispositif de traitement de données selon l'une quelconque des revendications précédentes, dans lequel au moins la première unité de traitement (102_1) comprend en outre une unité premier entré, premier sorti, FIFO, configurée pour stocker temporairement au moins un indice de point de départ de nœud de départ signalé par la deuxième unité de traitement (102_2).

11. Dispositif de traitement de données selon la revendication 1, dans lequel chacun des nœuds est en outre configuré pour stocker de multiples indices tous accessibles dans un accès unique au nœud.

12. Procédé, effectué par un dispositif de traitement de données, d'ordonnancement d'un ensemble d'éléments de données qui sont des éléments de données indexés transmis par un dispositif de transmission dans l'ordre et reçus par le dispositif de traitement de données dans le désordre, selon des indices des éléments de données et pour fournir un accès séquentiel à l'ensemble ordonné d'éléments de données, chacun des éléments de données ayant l'un des indices, dans lequel l'ordonnancement est fait à l'aide du dispositif de traitement de données comprenant une première unité de traitement (102_1) et une deuxième unité de traitement (102_2) connectées l'une à l'autre,

dans lequel la première unité de traitement (102_1) génère une liste chaînée (300A), la liste chaînée (300A) incluant une séquence de nœuds, chaque nœud stockant l'un des indices correspondant à l'élément de données ayant cet indice, agencé en séquence pour stocker les indices en une séquence ordonnée selon leur valeur dans un ordre monotone, chacun des nœuds dans la liste chaînée (300A) incluant un prochain pointeur pointant vers un nœud suivant dans la liste chaînée (300A) qui stocke un prochain indice de valeur plus élevée,

dans lequel la génération de la liste chaînée comprend la génération, pour chaque élément de données dans l'ensemble d'éléments de données, d'un nœud respectif de la liste chaînée,

dans lequel la génération du nœud respectif comprend le fait de trouver une position dans la liste chaînée pour générer le nœud respectif,

dans lequel le fait de trouver la position dans la liste chaînée pour générer le nœud respectif comprend la traversée d'un ou de plusieurs nœuds existants de la liste chaînée d'un nœud de départ à un nœud d'arrêt et la comparaison, pour chacun des nœuds traversés, de l'indice de l'élément de données respectif à l'indice fourni par le nœud traversé respectif,

dans lequel la deuxième unité de traitement (102_2) signale une identification de nœud de départ à la première unité de traitement (102_1), l'identification de nœud de départ identifiant l'un des nœuds de la liste chaînée en tant que nœud de départ ; et

dans lequel la liste chaînée générée par la première unité de traitement (102_1) est une première liste chaînée et la deuxième unité de traitement (102_2) génère une deuxième liste chaînée (300B) de nœuds, dans lequel chacun des nœuds de la deuxième liste chaînée (300B) est configuré pour comprendre un prochain pointeur pointant vers un nœud suivant dans la deuxième liste chaînée (300B) qui stocke un prochain indice de valeur plus élevée,

la deuxième liste chaînée (300B) comprend un ou plusieurs nœuds associés à un ou plusieurs nœuds de la première liste chaînée par chacun des un ou plusieurs nœuds de la deuxième liste chaînée (300B) comprenant également un pointeur vers un nœud respectif de la première liste chaînée et comprenant l'indice fourni par ce nœud respectif de la première liste chaînée,

dans lequel la deuxième liste chaînée (300B) comprend moins de nœuds que la première liste chaînée, et les indices fournis par les nœuds de la deuxième liste chaînée (300B) forment une sous-séquence de la séquence d'indices fournie par la première liste chaînée,

dans lequel la deuxième unité de traitement (102_2) sélectionne le nœud de départ en traversant un ou plusieurs nœuds de la deuxième liste chaînée (300B) d'un nœud de départ à un nœud d'arrêt et compare, pour chacun des nœuds traversés, l'indice de l'élément de données respectif à l'indice stocké par le nœud traversé respectif.

INDEXED DATA RECEIVED OUT OF
ORDER

100

PROCESSING DEVICE
(HARDWARE SORTER)

102_N

PROCESSING UNIT N (TOP)

INSERT | INSERT UPDATE | REMOVE

.
.
.

102_3

PROCESSING UNIT 3

INSERT | INSERT UPDATE | REMOVE

102_2

PROCESSING UNIT 2

INSERT | INSERT UPDATE | REMOVE

102_1

PROCESSING UNIT 1 (BOTTOM)

INDEXED DATA SORTED ACCORDING
TO INDICES

**FIG. 1**

INTERFACE TO HIGHER LAYER
PROCESSING UNIT 102_n+1

INSERT

INSERT
UPDATE

REMOVE

102_n

PROCESSING UNIT n

CONTROLLER

202_n

CONTROL

WRITE

READ

MEMORY

204_n

INSERT

INSERT
UPDATE

REMOVE

INTERFACE TO LOWER LAYER
PROCESSING UNIT 102_n-1

**FIG. 2**

FIG. 3

FIG. 4

500A

502
RECEIVE INDEX OF RECEIVED DATA ITEM
LAYER = TOP LAYER

504
IS LAYER EMPTY?

YES

NO

506
TRAVERSE LINKED LIST FROM READ POINTER UNTIL
(RECEIVED INDEX > INDEX VALUE OF NODE i) AND
(RECEIVED INDEX < INDEX VALUE OF NODE i+1)

508
TEMPORARILY STORE {#LAYER, NODE i)

510
TEMPORARILY STORE
{#LAYER, RD_PTR)

514
SEARCH START POINT =
INDEX VALUE OF NODE I,
LAYER = LAYER - 1

512
IS THIS LAST
(BOTTOM)
LAYER ?

NO

YES

516
GENERATE NEW NODE AT THE BOTTOM LAYER IN A POSITION
BETWEEN NODE I AND NODE i+1 WHERE
(RECEIVED INDEX > INDEX VALUE OF NODE i) AND
(RECEIVED INDEX < INDEX VALUE OF NODE i+1)

**FIG. 5A**

500B

520 ── LAYER = 2 (ONE LAYER ABOVE BOTTOM LAYER)

522 ── CREATE A RANDOM VALUE X IN THE RANGE 0 – 1 WITH UNIFORM PROBABILITY

524 ── X<= P?

NO

YES

526 ── GENERATE A NEW NODE AFTER THE TEMPORARILY STORED NODE {#LAYER, NODE i)

528 ── SET THE POINTER OF THE GENERATED NODE TO POINT TO A CORRESPONDING NODE IN THE NEXT LOWER LAYER (LAYER-1) WHICH STORES THE SAME INDEX

530 ── IS TOP LAYER?

532 ── LAYER = LAYER + 1

NO

YES

534 ── END

**FIG. 5B**

FIG. 6

700

702 — RECEIVE INDEX OF REMOVED DATA ITEM
LAYER = 1 (BOTTOM LAYER)

704 — INDEX OF THE NODE POINTED BY RD_PTR EQUALS EXP-MIN-VALUE?

NO

YES

706 — UPDATE THE RD_PTR OF LAYER 1 TO REMOVE THE NODE STORING THE REMOVED INDEX

708 — LAYER = LAYER + 1

710 — INDEX OF THE NODE POINTED BY RD_PTR EQUALS EXP-MIN-VALUE?

NO

YES

712 — UPDATE THE RD_PTR OF THE CURRENT LAYER TO REMOVE THE NODE STORING THE REMOVED INDEX

714 — IS TOP LAYER?

NO

YES

716 — UPDATE EXP-MIN-VALUE

**FIG. 7**

**FIG. 8A**

**FIG. 8B**

EP 4 183 116 B1

#SEARCHES VS. #NODES IN THE SORTER

FIG. 9A

EP 4 183 116 B1

FIG. 9B

CDF OF #READS PER LAYER

FIG. 9C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008192754 A1
- US 2018095719 A1